# EUROPEAN PATENT SPECIFICATION

(11) **EP 3 940 611 B1**
(45) Date of publication and mention of the grant of the patent: **18.10.2023**
(21) Application number: 19918742.8
(22) Date of filing: 14.03.2019
(51) Int. Cl.: G06F 21/62, H04L 9/00, G06F 21/51, G06Q 10/10, G06Q 20/38, G06F 21/64, G06F 16/13, G06F 16/14, G06Q 20/40, G06Q 40/02

(54) **PERSONAL INFORMATION MANAGEMENT SYSTEM, PERSONAL INFORMATION MANAGEMENT DEVICE, AND PERSONAL INFORMATION MANAGEMENT METHOD**
SYSTEM ZUR VERWALTUNG VON PERSÖNLICHEN INFORMATIONEN, VORRICHTUNG ZUR VERWALTUNG VON PERSÖNLICHEN INFORMATIONEN UND VERFAHREN ZUR VERWALTUNG VON PERSÖNLICHEN INFORMATIONEN
SYSTÈME, DISPOSITIF ET PROCÉDÉ DE GESTION D'INFORMATIONS PERSONNELLES

(43) Date of publication of application: 19.01.2022
(73) Proprietor: Hitachi, Ltd., Tokyo 100-8280 (JP)
(72) Inventor: YAMAZAKI, Kosei, Tokyo 100-8280 (JP); SHIBAI, Hiroyuki, Tokyo 100-8280 (JP); GOCHO, Ryuta, Tokyo 100-8280 (JP)
(74) Representative: MERH-IP Matias Erny Reichl Hoffmann Patentanwälte PartG mbB
(86) International application number: PCT/JP2019/010675
(87) International publication number: WO 2020/183726

(56) References cited:
- WO-A1-2018/135328
- JP-A- 2007 035 022
- JP-A- 2008 210 043
- JP-A- 2018 182 710
- US-A1- 2018 307 859
- ALPHA WANG TENCENT: "Futuristic DLT Technologies foresee "FGDLT for 2021 and Beyond";DLT-I-084", ITU-T DRAFT; STUDY PERIOD 2017-2020; FOCUS GROUP FGDLT; SERIES DLT-I-084, INTERNATIONAL TELECOMMUNICATION UNION, GENEVA ; CH , vol. fgdlt 23 May 2018 (2018-05-23), pages 1-7, XP044249893, Retrieved from the Internet: URL:https://extranet.itu.int/sites/itu-t/f ocusgroups/fgdlt/input/DLT-I-084.docx [retrieved on 2018-05-23]
- MICHAEL AULT: "Why new off-chain storage is required for blockchains Document version 1.0", , October 2018 (2018-10), XP055739799, Retrieved from the Internet: URL:https://www.researchgate.net/publicati on/328513107_Why_new_off-chain_storage_is_ required_for_blockchains_Document_version_ 10
- Anonymous: "Blockchain EXE Legal #2", , 23 January 2019 (2019-01-23), pages 1-39, XP055841556, Retrieved from the Internet: URL:https://blockchainexe.com/legal_2_4

## Description

### BACKGROUND

This invention relates to a personal information management system, a personal information management apparatus, and a personal information management method.

In JP 2018-124924 A, it is described that "a block storing information on each stage in a credit guarantee procedure between a purchaser and an intermediary and a block storing information on each stage in a credit guarantee procedure between the intermediary and a seller are managed by a blockchain."

A transaction management apparatus of JP 2018-124924 A is configured to manage the information on each stage in the credit guarantee procedures between the purchaser, the seller, and the intermediary during a sales transaction by a blockchain. However, the blockchain inhibits information stored therein from being deleted. Furthermore, US 2018 / 307 859 A1 discloses a system for improving data security, privacy, and accuracy by using dynamically changing identifiers to render elements of data, which may be stored in a Distributed Ledger Technology (DLT), such as a blockchain, to be anonymous. Eventually, Alpha Wang Tencent (c.f., "Futuristic DLT Technologies foresee "FGDLT for 2021 and beyond"; DLT-I-084", vol. fgdlt, (20180523), pages 1 - 7) provides a template for the description of the characteristics of DaTs (i.e., Data Access Technologies) which consists of several components, including interconnectivity, consensus routing, data interaction, privacy and security and the like, wherein advantage of DLT's potential and disruptive impact is taken.

### SUMMARY

This invention has an object to enable examination of whether or not a fraud has been committed and deletion of personal information.

Aspects of the invention disclosed in this application are is set out in the appended set of claims, wherein dependent claims correspond to the preferably embodiments of the present invention.

According to at least one representative embodiment of this invention, it is possible to enable the examination of whether or not the fraud has been committed and the deletion of the personal information. Other features, aspects, and advantages of the subject matter will become apparent from the description, the drawings, and the claims.

### BRIEF DESCRIPTION OF THE DRAWINGS

FIG. 1 is an explanatory diagram for illustrating a system configuration example of the personal information management system.
FIG. 2 is a block diagram illustrating a hardware configuration example of the detection apparatus.
FIG. 3 is a block diagram for illustrating a functional configuration example of the task processing server.
FIG. 4 is a block diagram for illustrating a functional configuration example of each blockchain server.
FIG. 5 is an explanatory diagram for illustrating a block generation example for an audit result.
FIG. 6 is an explanatory table for showing a data structure example of the block BL1 including the audit result.
FIG. 7 is an explanatory diagram for illustrating an example of audit trail block generation processing at a time of personal information registration.
FIG. 8 is an explanatory table for showing a data structure example of the block BLN (N≤2) including the audit trail.
FIG. 9 is an explanatory diagram for illustrating an example of a registration request screen of the accompanying information.
FIG. 10 is an explanatory diagram for illustrating an example of a registration failure screen.
FIG. 11 is an explanatory diagram for illustrating an example of a registration success screen.
FIG. 12 is an explanatory diagram for illustrating an example of registration confirmation processing for the audit trail block.
FIG. 13 is an explanatory diagram for illustrating an example of a registration confirmation request screen.
FIG. 14 is an explanatory diagram for illustrating an example of a registration confirmation result display screen.
FIG. 15 is an explanatory diagram for illustrating an example of audit trail block generation processing to be performed when the accompanying information is deleted.
FIG. 16 is an explanatory diagram for illustrating an example of a deletion request screen for the accompanying information.
FIG. 17 is an explanatory diagram for illustrating an example of a deletion failure screen.
FIG. 18 is an explanatory diagram for illustrating an example of a deletion success screen.

### DETAILED DESCRIPTION OF THE PREFERRED EMBODIMENTS

Now, a personal information management system, a personal information management apparatus, and a personal information management method each using a blockchain (hereinafter referred to sometimes as "BC") technology are described with reference to the accompanying drawings.

### <System Configuration Example of Personal Information Management System>

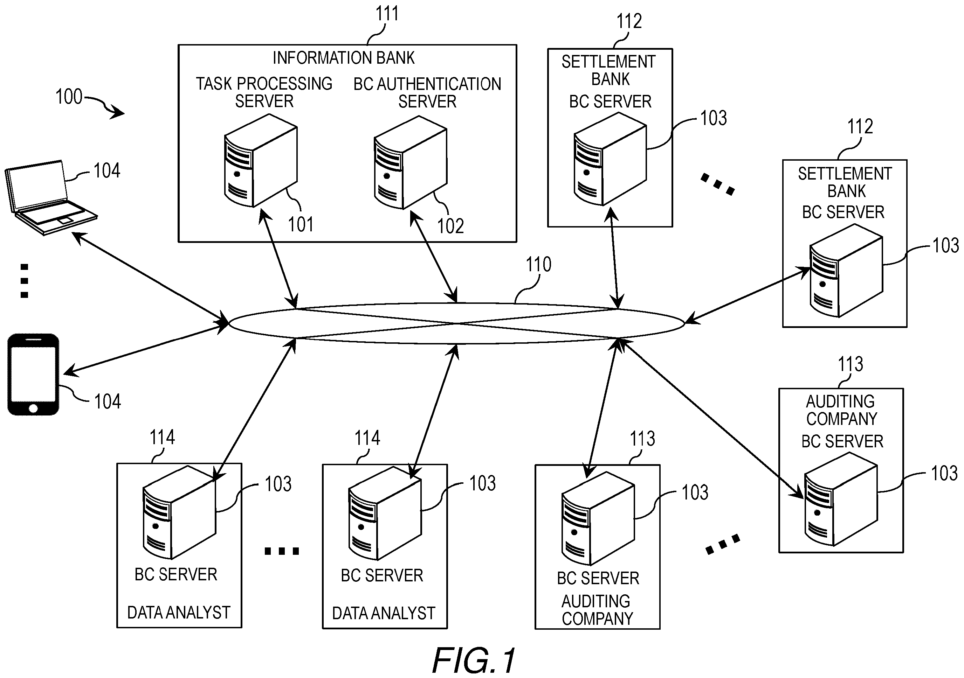

FIG. 1 is an explanatory diagram for illustrating a system configuration example of the personal information management system. A personal information management system 100 includes a task processing server 101, a blockchain authentication server 102, blockchain servers 103, and terminals 104. In the personal information management system 100, those computers are coupled to one another so as to enable communication therebetween through a network 110, for example, the Internet, a local area network (LAN), or a wide area network (WAN).

The task processing server 101 is a personal information management apparatus configured to execute predetermined task processing (for example, personal information management processing) by transmitting and receiving data relating to a transaction including personal information on a user of each terminal 104 to/from the task processing server 101, the blockchain authentication server 102, and the terminals 104 through the network 110.

The personal information includes personal information metadata and accompanying information. The personal information metadata is immutable information that can uniquely identify an individual, which includes the individual's name, birth date, gender, resident card code, individual number, telephone number, insurance number, passport number, and driver's license number.

The accompanying information is, for example, a behavior history, a purchase history, and other information that accompanies the personal information metadata, and is information that cannot solely identify whom the information belongs to. The accompanying information is a combination of a type and data specified by the type. For example, when "amount of electricity usage in November 2018 was 200 kilowatts," the wording "amount of electricity usage" and the wording "November 2018" correspond to the types, and the wording "200 kilowatts" corresponds to the data. The number of types may be two as in this example, but may be one, or the type may be subdivided into three or more.

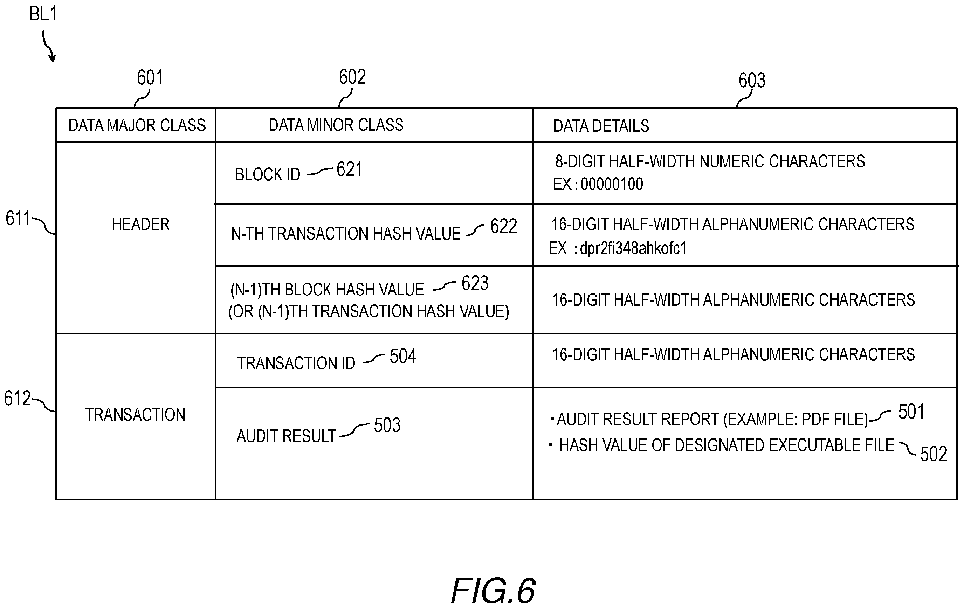

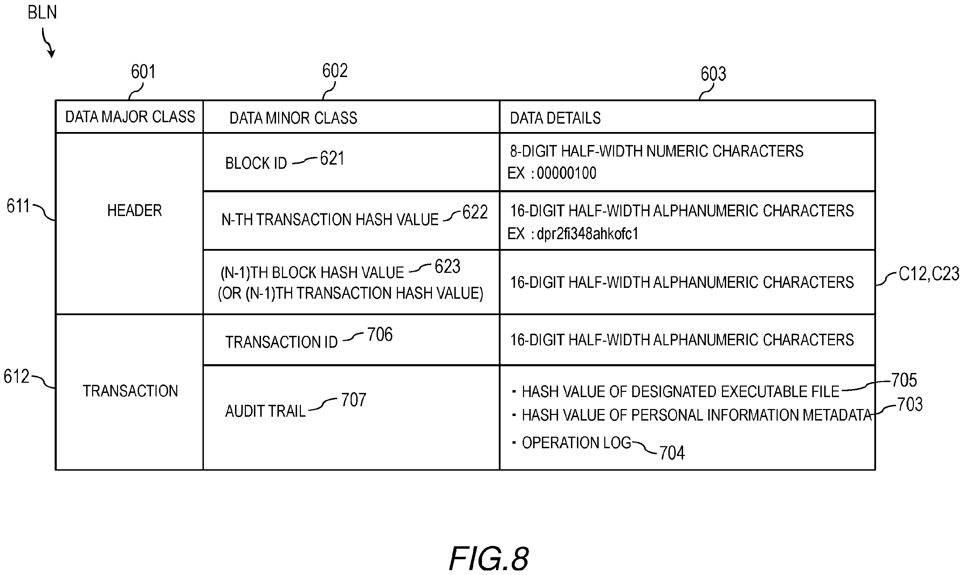

The transaction is a transaction in a certain task. Examples of the transaction include: deposit and withdrawal of cash, settlement, and confirmation of those tasks; various audits; reservation for transportation, accommodation facilities, and entertainment facilities; and purchase of a product on an e-commerce website. In addition, in at least one embodiment of this invention, examples of the transaction include: payment and confirmation of the amount of electricity usage of an individual; and acquisition, registration, change, and deletion of data on personal information and audit results (however, blocks forming a blockchain cannot be changed or deleted). The data relating to a transaction is data involved in the transaction or a hash value thereof. In the following description, the data relating to a transaction may be referred to simply as "transaction" as shown in FIG. 6 and FIG. 8.

The blockchain authentication server 102 is a server configured to authenticate the blockchain server 103. In other words, the server authenticated by the blockchain authentication server 102 can generate a blockchain as the blockchain server 103. The task processing server 101 and the blockchain authentication server 102 are servers owned by an information bank 111. The information bank 111 is a business entity that manages personal information on an individual and provides the personal information (at cost) to data analysts 114 on behalf of the individual. The information bank 111 passes a part of profits on to the individual who has entrusted the personal information.

The blockchain servers 103 are each configured to generate a blockchain by using the information received from the task processing server 101. Examples of the blockchain server 103 include servers owned by a settlement bank 112, an auditing company 113, and the data analyst 114. The settlement bank 112 is responsible for settlement processing that occurs in a personal information transaction at the information bank 111. For example, the settlement bank 112 settles a sales transaction of the personal information from the information bank 111 to the data analyst 114 and a return of profits from the information bank 111 to an individual. The auditing company 113 audits tasks relating to the personal information which are performed by the information bank 111. The data analyst 114 utilizes the personal information managed by the information bank 111, for analysis purposes. For example, the data analyst 114 uses the personal information provided by the information bank 111 to perform various analyses including trends in electric power consumption, sales of products, and predictions of a congestion degree in a certain area.

The terminals 104 are each a computer owned by an individual who has entrusted the personal information. Examples of the terminal 104 include a personal computer, a smartphone, and a tablet.

### <Hardware Configuration Example of Computer>

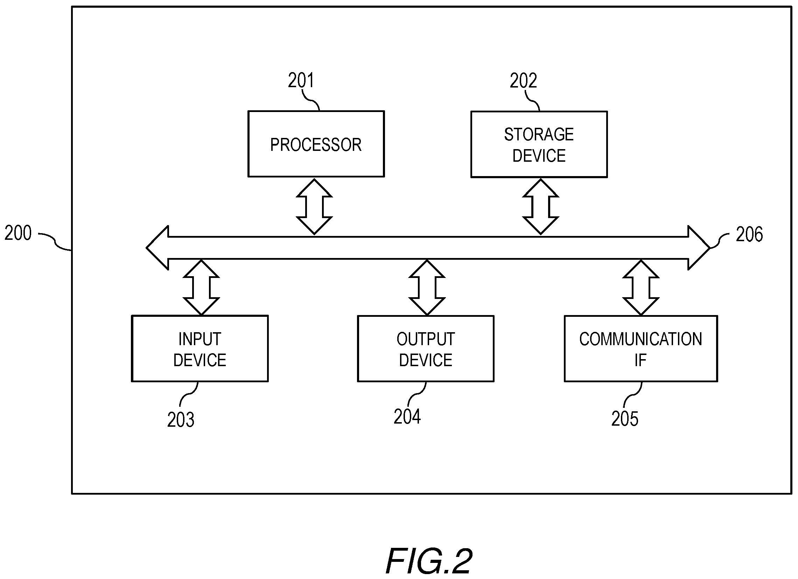

FIG. 2 is a block diagram illustrating a hardware configuration example of a computer (a generic term for the task processing server 101, the blockchain authentication server 102, the blockchain server 103, and the terminal 104 shown in FIG.1). A computer 200 includes a processor 201, a storage device 202, an input device 203, an output device 204, and a communication interface (communication IF) 205. The processor 201, the storage device 202, the input device 203, the output device 204, and the communication IF 205 are coupled to one another through a bus 206. The processor 201 is configured to control the computer 200. The storage device 202 serves as a work area for the processor 201. The storage device 202 is also a non-transitory or transitory recording medium configured to store various programs and various kinds of data. Examples of the storage device 202 include a read only memory (ROM), a random access memory (RAM), a hard disk drive (HDD), and a flash memory. The input device 203 is configured to input data. Examples of the input device 203 include a keyboard, a mouse, a touch panel, a numeric keypad, and a scanner. The output device 204 is configured to output data. Examples of the output device 204 include a display, a printer, and a speaker. The communication IF 205 is coupled to the network 110, and is configured to transmit and receive data.

### <Functional Configuration Example of Task Processing Server 101>

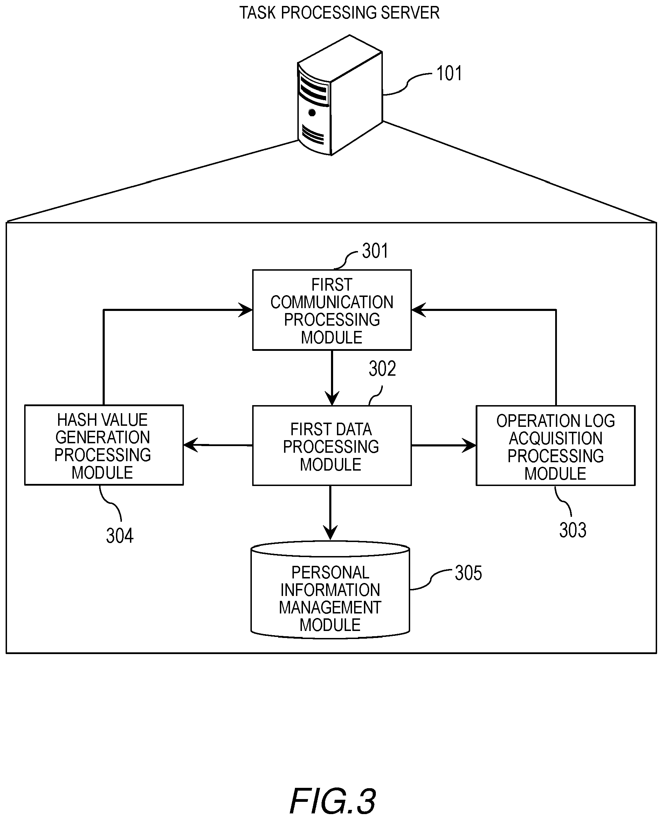

FIG. 3 is a block diagram for illustrating a functional configuration example of the task processing server 101. The task processing server 101 includes a first communication processing module 301, a first data processing module 302, an operation log acquisition processing module 303, a hash value generation processing module 304, and a personal information management module 305. Specifically, the first communication processing module 301, the first data processing module 302, the operation log acquisition processing module 303, and the hash value generation processing module 304 are each a function to be implemented by, for example, causing the processor 201 to execute a program (executable file) stored in the storage device 202 illustrated in FIG. 2. The personal information management module 305 is a function to be implemented by the storage device 202 illustrated in FIG. 2.

The first communication processing module 301 is configured to execute first communication processing by the executable file. The first communication processing is processing for transmitting and receiving data relating to a transaction to/from the blockchain authentication server 102, the blockchain server 103, and the terminal 104 through the network 110.

The first data processing module 302 is configured to execute first data processing by the executable file. The first data processing to be executed includes, for example, storing data in the personal information management module 305, reading data from the personal information management module 305, deleting, encrypting, decrypting, compressing, and decompressing data in the personal information management module 305, performing image processing, performing natural language processing, and associating a plurality of pieces of data with one another. Specifically, for example, the first data processing module 302 executes the first data processing on data relating to audits and personal information, and calls the blockchain server 103 as an access destination.

The operation log acquisition processing module 303 is configured to execute operation log acquisition processing by the executable file. The operation log acquisition processing is processing for acquiring an operation log. The operation log is data indicating an operation history of when and what kind of data processing was performed on which data by the terminal 104 or the task processing server 101.

The hash value generation processing module 304 is configured to execute hash value generation processing by the executable file. The hash value generation processing is processing for inputting data to a hash function and outputting a hash value. The data to be input to the hash function may be at least one of the executable file of the first data processing module 302, the executable file of the operation log acquisition processing module 303, or the executable file of the hash value generation processing module 304 which are included in the task processing server 101. The data to be input to the hash function may also be a specific binary code in the executable file instead of the entire executable file. The executable file or the specific binary code being the data to be input to the hash function is designated in advance, and is therefore referred to as "designated executable file."

The personal information management module 305 is a storage area for managing data relating to personal information. The personal information management module 305 is provided for each user, and includes personal information metadata on the user. Therefore, data stored in the personal information management module 305 for a given user is associated with the personal information metadata on the given user. The personal information management module 305 may store data other than the data relating to the personal information.

### <Functional Configuration Example of Blockchain Server 103>

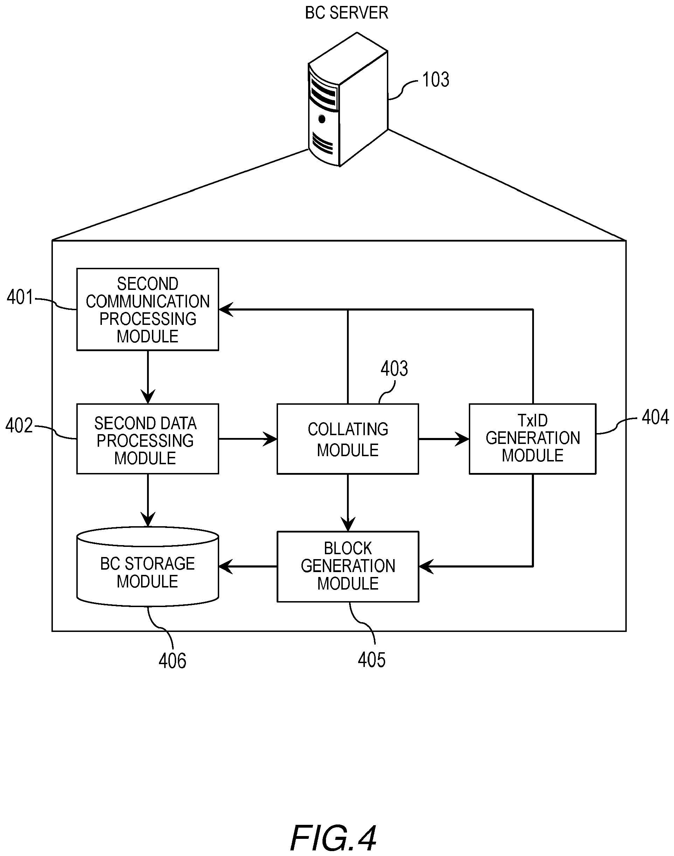

FIG. 4 is a block diagram for illustrating a functional configuration example of each blockchain server 103. The blockchain server 103 includes a second communication processing module 401, a second data processing module 402, a collating module 403, a TxID generation module 404, a block generation module 405, and a BC storage module 406. Specifically, the second communication processing module 401, the second data processing module 402, the collating module 403, the TxID generation module 404, and the block generation module 405 are each a function to be implemented by, for example, causing the processor 201 to execute a program stored in the storage device 202 illustrated in FIG. 2. The BC storage module 406 is a function to be implemented by the storage device 202 illustrated in FIG. 2.

The second communication processing module 401 is configured to execute second communication processing. The second communication processing is processing for transmitting and receiving data to/from the blockchain authentication server 102 and the terminal 104 through the network 110.

The second data processing module 402 is configured to execute second data processing. The second data processing includes, for example, storing data in the BC storage module 406, reading data from the BC storage module 406, and changing, deleting (however, blocks forming a blockchain cannot be changed or deleted), encrypting, decrypting, compressing, decompressing, and searching data in the BC storage module 406. The second data processing module 402 may also execute calling of an access destination.

Specifically, for example, the second data processing module 402 executes the second data processing on audit trails relating to the data and personal information which are received from the task processing server 101.

The collating module 403 is configured to execute processing for collating two pieces of data. The pieces of data to be collated are, for example, the hash value of the executable file received from the task processing server 101 in the past and the hash value of the executable file newly received from the task processing server 101 after that. Through collation of both the pieces of hash values, it is possible to confirm that the task processing server 101 is not executing fraudulent processing.

The TxID generation module 404 is configured to execute processing for generating a transaction ID (hereinafter referred to sometimes as "TxID"). The transaction ID is identification information for uniquely identifying a transaction, and corresponds to a block forming a blockchain.

The block generation module 405 is configured to generate blocks forming a blockchain and associate the blocks with the blockchain, to thereby update the blockchain. In the at least one embodiment, data relating to one transaction is stored in one block. A data structure of a block is described later with reference to FIG. 6.

The BC storage module 406 is a storage area for storing a blockchain. The BC storage module 406 may store data other than the blockchain.

### <Block Generation Example for Audit Result>

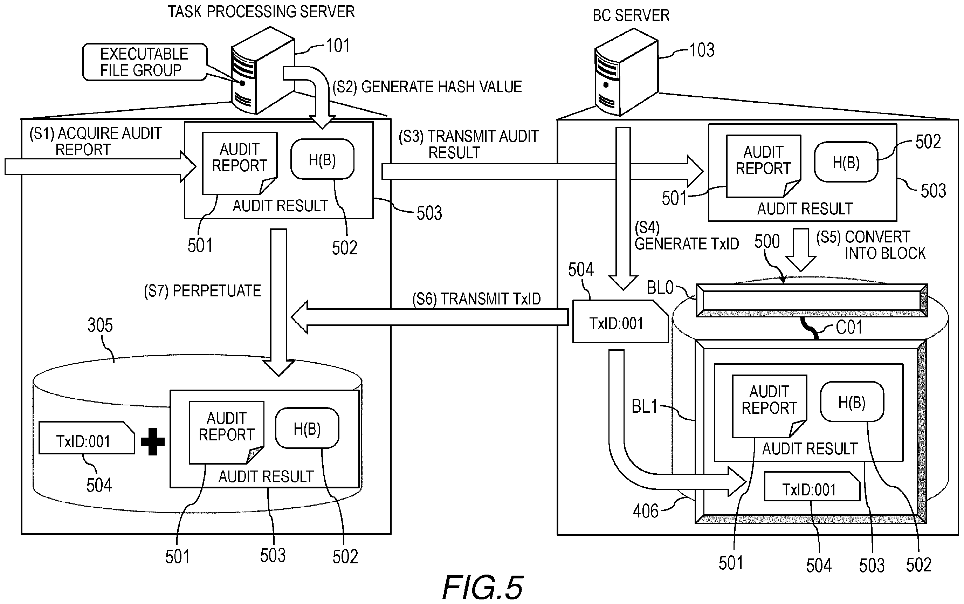

FIG. 5 is an explanatory diagram for illustrating a block generation example for an audit result. In FIG. 5, for example, a block generation example to be performed when the auditing company 113 conducts an audit on a personal information management entity and then manages an audit result by the blockchain server 103 is illustrated. The personal information management entity is, for example, the information bank 111 that operates the task processing server 101. As the audit on the personal information management entity, in addition to a general audit, it is checked whether or not each of the first data processing module 302, the operation log acquisition processing module 303, and the hash value generation processing module 304 which are included in the task processing server 101 has executed fraudulent processing, and a hash value obtained by inputting the designated executable file to the hash function is output.

In addition, each blockchain server 103 authenticated by the blockchain authentication server 102 includes a blockchain 500 including only a head block BL0 for a target specific piece of personal information. The head block BL0 indicates that this blockchain 500 is a blockchain relating to the specific piece of personal information.

First, the task processing server 101 acquires an audit report (electronic data) 501 (Step S1). The task processing server 101 controls the first data processing module 302 to read the designated executable file by being triggered by the acquisition of the audit report 501 (Step S1), and controls the hash value generation processing module 304 to generate a hash value 502 of the designated executable file (Step S2). A combination of the audit report 501 and the hash value 502 of the designated executable file is defined as an audit result 503. Then, the task processing server 101 controls the first communication processing module 301 to transmit the audit result 503 to all the blockchain servers 103 authenticated by the blockchain authentication server 102 (Step S3).

When the audit result 503 is received by the second communication processing module 401, the blockchain server 103 controls the TxID generation module 404 to generate a transaction ID 504 (Step S4). In this case, the generated transaction ID 504 is set to have a value of "001" as an example for the sake of convenience. The transaction ID 504 is assumed to have the same value as that of the transaction ID 504 generated by another blockchain server 103.

The blockchain server 103 also controls the block generation module 405 to generate a block BL1 in which the received audit result 503 and the generated transaction ID 504 are associated with each other (Step S5), and associate the block BL1 with the head block BL0, to thereby update the blockchain 500 to the latest state. In this case, the generated block BL1 is assumed to be associated with the head block BL0 by the chain C01. The chain C01 is achieved by, for example, including the hash value of the head block BL0 in the block BL1.

After the block BL1 is generated, the blockchain server 103 controls the second communication processing module 401 to transmit the transaction ID 504 to the task processing server 101 (Step S6). Then, the task processing server 101 controls the first communication processing module 301 to receive the transaction ID 504, and controls the first data processing module 302 to perform perpetuation, that is, to store the transaction ID 504 and the held audit result 503 in the personal information management module 305 in association with each other (Step S7).

The task processing server 101 receives the same transaction ID 504 from all the blockchain servers 103 authenticated by the blockchain authentication server 102, but it suffices that any one of transaction IDs 504 is associated with the audit result 503. The term "any one of transaction IDs 504" may refer to any one of transaction IDs 504 that have been received from all the blockchain servers 103, the transaction ID 504 that has arrived first, or the transaction ID 504 that has arrived last.

If any one of transaction IDs 504 is the first-arrived transaction ID 504, the perpetuation (Step S7) can be achieved early. Meanwhile, if any one of transaction IDs 504 is the last-arrived transaction ID 504 it can be confirmed that the transaction ID 504 has been generated by the blockchain server 103.

### <Data Structure Example of Block BL1 Including Audit Result 503>

FIG. 6 is an explanatory table for showing a data structure example of the block BL1 including the audit result 503. Not only the block BL1 but also a block BL*N* (where *N* represents an integer of 0 or greater) is formed of a header 611 and a transaction 612 as data major classes 601. The header 611 includes a block ID 621, an *N*-th transaction hash value 622, and an (*N-1*)th block hash value 623 as data minor classes 602. However, the head block BL0 does not include the (*N-1*)th block hash value 623. The transaction 612 includes the transaction ID 504 and the audit result 503. Data details 603 show specific examples of the data minor classes 602.

The block ID 621 is identification information for uniquely identifying the block BL*N*. The block ID 621 is, for example, 8-digit half-width numeric characters. The block ID 621 indicates, for example, a place in an order of generating the block BL*N*. In FIG. 6, the block ID 621 is the block ID of the block BL1.

The *N*-th transaction hash value 622 is a hash value output when the transaction 612 in an *N*-th block (where *N* represents an integer of 0 or greater) is given to the hash function. The *N*-th transaction hash value 622 is, for example, 16-digit half-width alphanumeric characters. When the block ID 621 is the place in the order of generation, *N* may be the block ID 621. In this case, the head block BL0 of the blockchain is set to *N*=0. In FIG. 6, a block number *N* of the block BL1 is set to *N*=1. Therefore, the *N*-th transaction hash value 622 is a hash value of the transaction 612 of the block BL1, that is, the data obtained by concatenating the transaction ID 504 and the audit result 503 with each other.

The (*N-1*)th block hash value 623 is a hash value output when an (*N-1*)th block, that is, a block BL*N-1* generated immediately before, is given to the hash function. The (*N-1*)th block hash value 623 is, for example, 16-digit half-width alphanumeric characters. The (*N-1*)th block hash value 623 is included in the header, to thereby able to associate the head block BL0 with the block BL*N-1* generated immediately before. In FIG. 6, the (*N-1*)th block hash value 623 is a hash value of the head block BL0, and hence the block BL1 is associated with the head block BL0.

An (*N-1*)th transaction hash value may be used in place of the (*N-1*)th block hash value 623. The (*N-1*)th transaction hash value is a hash value output when an (*N-1*)th transaction, that is, the transaction 612 in the block BLN-1 generated immediately before, is given to the hash function. In FIG. 6, the (*N-1*)th transaction hash value is the hash value of the transaction 612 in the head block BL0.

### <Example of Audit Trail Block Generation Processing>

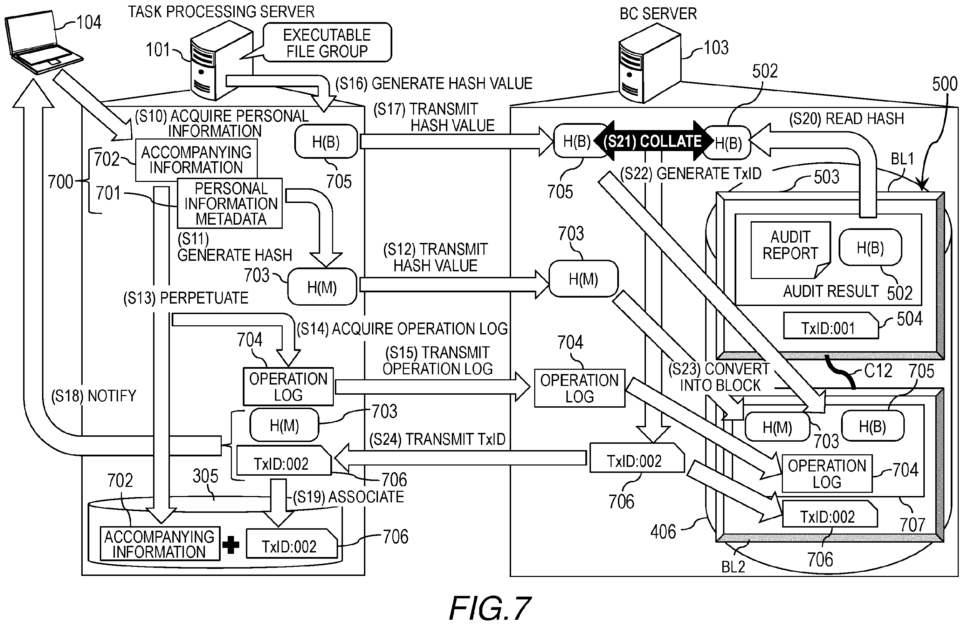

FIG. 7 is an explanatory diagram for illustrating an example of audit trail block generation processing at a time of personal information registration. The audit trail block is a block including an audit trail in a transaction, and in this example, the block BL*N* (*N*≤2) corresponds to the audit trail block. As a premise of the audit trail block generation processing, it is assumed that an agreement about passing the personal information on a user to a third party has been concluded in advance between an individual being the user and the information bank 111, and that there is a path that enables the terminal 104 of the individual to access the task processing server 101. In other words, it is assumed that the task processing server 101 has opened a page for the individual.

FIG. 7 shows an exemplary case of newly adding a block BL2 to the blockchain 500 formed of the head block BL0 (not shown) and the block BL1. In the at least one embodiment, the user provides personal information 700 to the task processing server 101, but the task processing server 101 controls the blockchain server 103 to manage a hash value 703 of personal information metadata 701 of the personal information 700, and accompanying information 702 is managed by the task processing server 101 itself. Therefore, when the task processing server 101 registers the accompanying information 702, the blockchain server 103 can register the audit trail relating to the registration of the accompanying information 702 in the blockchain 500.

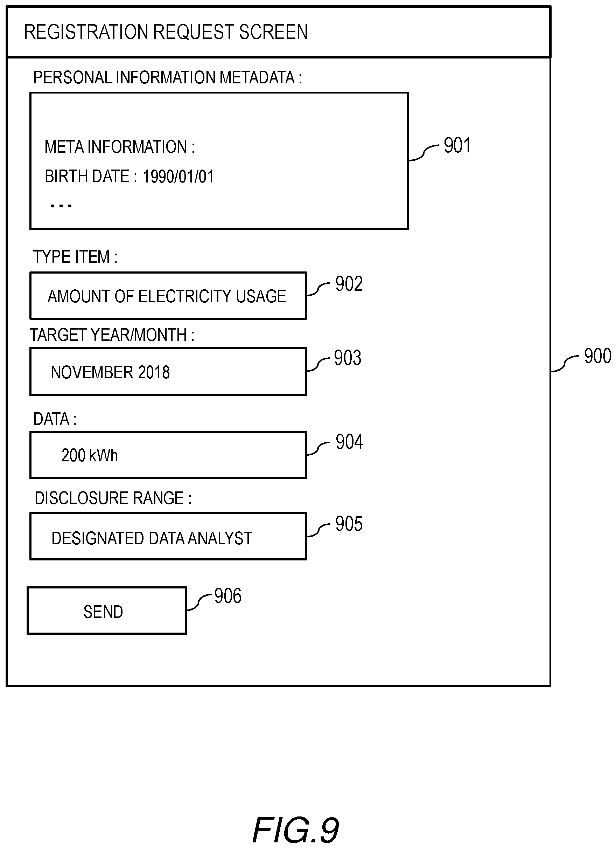

The task processing server 101 controls the first communication processing module 301 to acquire the personal information 700 on the user of the terminal 104 from the terminal 104 (Step S10). As described above, the personal information 700 includes the personal information metadata 701 and the accompanying information 702. The personal information 700 is input to a registration request screen 900 (illustrated in, for example, FIG. 9 described later) displayed on the terminal 104, and is transmitted from the terminal 104 to the task processing server 101.

Subsequently, the task processing server 101 controls the hash value generation processing module 304 to give the personal information metadata 701 to the hash function and generate the hash value 703 of the personal information metadata 701 (Step S11). Then, the task processing server 101 transmits the hash value 703 to all the blockchain servers 103 authenticated by the blockchain authentication server 102 (Step S12).

Then, the task processing server 101 perpetuates the accompanying information 702 of the personal information 700, that is, stores the accompanying information 702 in the personal information management module 305 (Step S13). Subsequently, the task processing server 101 controls the operation log acquisition processing module 303 to acquire an operation log 704 of, for example, up to the perpetuation (Step S13) of the accompanying information 702 (Step S14), and transmits the operation log 704 to all the blockchain servers 103 authenticated by the blockchain authentication server 102 (Step S15).

Further, the task processing server 101 controls the first data processing module 302 to read the designated executable file by being triggered by the acquisition of the personal information 700 (Step S10), and controls the hash value generation processing module 304 to generate a hash value 705 of the designated executable file (Step S16). Then, the task processing server 101 controls the first communication processing module 301 to transmit the hash value 705 to all the blockchain servers 103 authenticated by the blockchain authentication server 102 (Step S17).

When the hash value 705 is received by the second communication processing module 401, the blockchain server 103 controls the second data processing module 402 to read the hash value 502 of the designated executable file included in the audit result 503 from the block BL1 stored in the BC storage module 406 (Step S20).

Then, the blockchain server 103 controls the collating module 403 to collate both the hash values 705 and 502, that is, determines whether or not both the hash values 705 and 502 match each other (Step S21). When both the hash values 705 and 502 do not match each other, the collation fails, and hence the processing is brought to an end without generating a new block BL2. In this case, the blockchain server 103 notifies the terminal 104 of a registration failure through intermediation of the task processing server 101.

Meanwhile, when both the hash values 705 and 502 match each other, the blockchain server 103 controls the TxID generation module 404 to generate a transaction ID 706 (Step S22). In this case, the generated transaction ID 706 is set to have a value of "002" as an example. The transaction ID 706 is assumed to have the same value as that of the transaction ID 706 generated by another blockchain server 103.

Subsequently, the blockchain server 103 controls the block generation module 405 to generate the block BL2 and associate the block BL2 with the block BL1, to thereby update the blockchain 500 (Step S23). The block BL2 sets the hash value 703 of the personal information metadata 701, the operation log 704, and the hash value 705 of the designated executable file as an audit trail 707, and includes the audit trail 707 in the transaction 612 together with a transaction ID 706. The block BL2 is associated with the block BL1 generated immediately before by a chain C12. The chain C12 is achieved by the (*N-1*)th block hash value 623 included in the header of the block BL2, that is, the hash value of the block BL1.

The blockchain server 103 also controls the second communication processing module 401 to transmit the transaction ID 706 to the task processing server 101 (Step S24). The blockchain server 103 is set to transmit the transaction ID 706 to the task processing server 101 after updating the blockchain 500, to thereby be able to guarantee that the update of the blockchain 500 has been completed.

After that, the task processing server 101 controls the first communication processing module 301 to receive the transaction ID 706 from the blockchain server 103, and notify the terminal 104 of the received transaction ID 706 and the hash value 703 of the personal information metadata 701 (Step S18). This enables the user to confirm that the audit trail 707 has been successfully registered.

Further, the task processing server 101 also controls the first data processing module 302 to store the received transaction ID 706 in the personal information management module 305 in association with the perpetuated (Step S13) accompanying information 702 (Step S19). Thus, the accompanying information 702 is managed in the task processing server 101 in association with the block BL2 and separately from the audit trail 707.

When the task processing server 101 changes the accompanying information 702, the changed accompanying information 702 is set as new accompanying information 702, to thereby be able to manage the changed accompanying information 702 as well in association with a new transaction ID as described above.

### <Data Structure Example of Block BLN (N≤2) Including Audit Trail 707>

FIG. 8 is an explanatory table for showing a data structure example of the block BL*N* (*N*≤2) including the audit trail 707. In FIG. 8, a case of *N*=2 is described as an example. The same components as those of FIG. 6 are denoted by the same reference numerals, and description thereof is omitted. The *N*-th transaction hash value 622 is the hash value of the transaction 612 of the block BL2, that is, the data obtained by concatenating the transaction ID 706 and the audit trail 707 with each other. The (*N-1*)th block hash value 623 is the hash value of the block BL1.

### <Example of Registration Request Screen>

FIG. 9 is an explanatory diagram for illustrating an example of a registration request screen of the accompanying information 702. The registration request screen 900 is the page for the individual opened by the task processing server 101, and is displayed on a display (example of the output device 204) of the terminal 104 of the individual who has logged in to the task processing server 101. The registration request screen 900 includes a personal information display area 901, a type item selection pull-down 902, a target year/month selection pull-down 903, a data input area 904, a disclosure range selection pull-down 905, and a send button 906.

The personal information display area 901 is an area for displaying the personal information metadata 701 on the user who has logged in to the task processing server 101. The type item selection pull-down 902 is a pull-down menu for selecting a type item of the accompanying information 702, for example, "amount of electricity usage."

The target year/month selection pull-down 903 is a pull-down menu for selecting a year/month of the type item "amount of electricity usage" to be registered in the blockchain server 103, for example, "November 2018". The data input area 904 is an area for inputting numerical data under the type (combination of the type item "amount of electricity usage" and the target year/month "November 2018"), for example, "200 kilowatts".

The disclosure range selection pull-down 905 is a pull-down menu for selecting a disclosure range of the accompanying information 702. The disclosure range is targeted to the data analyst 114. For example, in a case of "all data analysts," the information bank 111 is allowed to disclose the accompanying information 702 input to the registration request screen 900 to all the data analysts 114 registered in the task processing server 101. Meanwhile, in a case of "designated data analyst," the information bank 111 is allowed to disclose the accompanying information 702 input to the registration request screen 900 only to the data analyst 114 designated by the user among all the data analysts 114 registered in the task processing server 101.

Information displayed in the personal information display area 901 is the personal information metadata 701 on the user. Information selected and input in the type item selection pull-down 902, the target year/month selection pull-down 903, and the data input area 904 corresponds to the accompanying information 702 on the user. A combination of the personal information metadata 701 and the accompanying information 702 corresponds to the personal information 700 on the user.

The send button 906 is a button for transmitting the personal information 700 on the user to the task processing server 101. When the send button 906 is pressed through an operation of the terminal 104, the personal information 700 is transmitted from the terminal 104 to the task processing server 101. Thus, the task processing server 101 can acquire the personal information 700 as illustrated in FIG. 7 (Step S10).

### <Example of Registration Failure Screen>

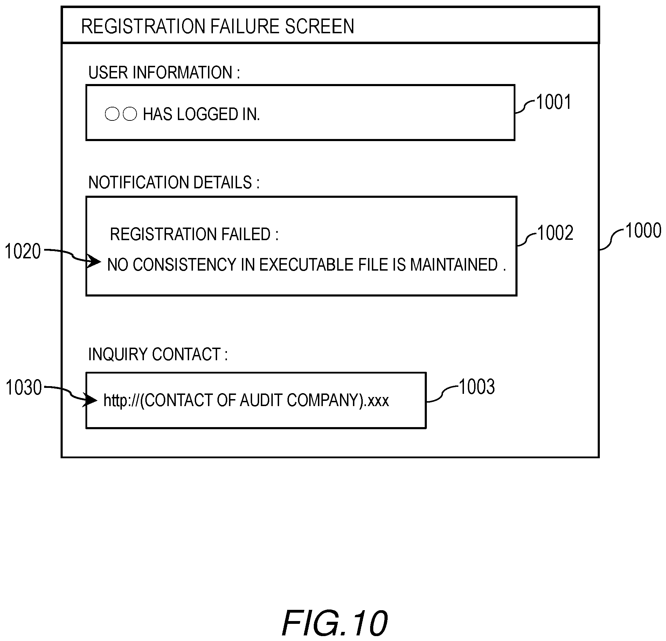

FIG. 10 is an explanatory diagram for illustrating an example of a registration failure screen. A registration failure screen 1000 is a screen displayed on the display of the terminal 104 when, for example, the blockchain server 103 determines that both the hash values 705 and 502 do not match each other in Step S21 of FIG. 7 and a notification of the registration failure is transmitted to the terminal 104 through intermediation of the task processing server 101.

The registration failure screen 1000 includes a user information display area 1001, a notification details display area 1002, and an inquiry contact display area 1003. The user information display area 1001 is an area for displaying a current status of the user indicating that, for example, the user has logged in. The notification details display area 1002 is an area for displaying the notification details received from the blockchain server 103. In FIG. 10, the registration failure screen 1000 is illustrated, and hence a character string 1020 indicating the registration failure corresponds to the notification details.

The inquiry contact display area 1003 is an area for displaying a uniform resource locator (URL) of an inquiry destination regarding the notification details. For example, when the inquiry destination is the auditing company 113, a URL of the blockchain server 103 of the auditing company 113 corresponds to the URL of the inquiry destination. A hyperlink 1030 is embedded in the URL, and through destination of the hyperlink 1030, it is possible to access a page for requesting the auditing company 113 to conduct an extraordinary audit on the information bank 111. This enables transparent processing to be achieved.

### <Example of Registration Success Screen>

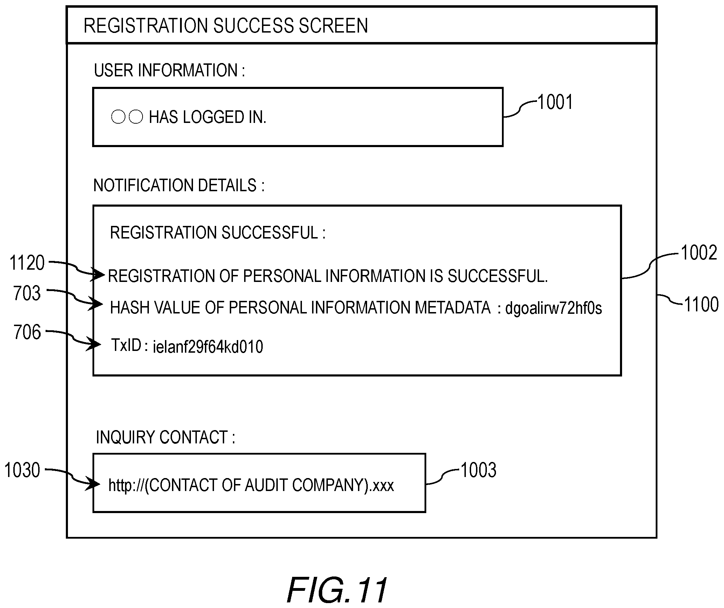

FIG. 11 is an explanatory diagram for illustrating an example of a registration success screen. The same components as those in FIG. 10 are denoted by the same reference numerals, and description thereof is omitted. A registration success screen 1100 is a screen displayed on the display of the terminal 104 when, for example, the task processing server 101 notifies the terminal 104 of the transaction ID 706 and the hash value 703 of the personal information metadata 701 in Step S18 of FIG. 7. In FIG. 11, the registration success screen 1100 is illustrated, and hence the notification details include a character string 1120 indicating a registration success, the hash value 703 of the personal information metadata 701, and the transaction ID 706.

### <Example of Registration Confirmation Processing for Audit Trail Block>

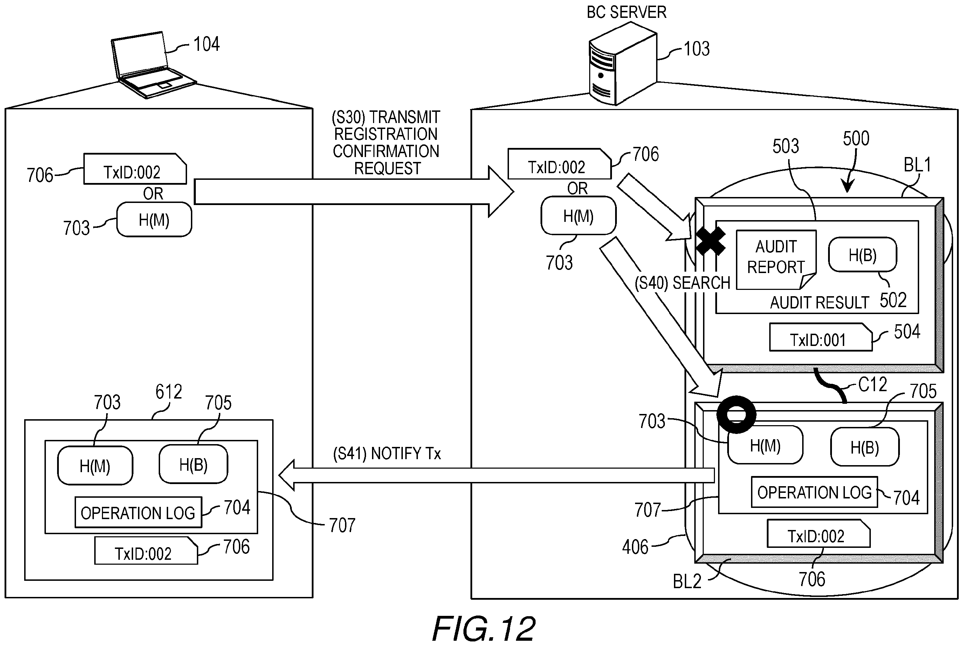

FIG. 12 is an explanatory diagram for illustrating an example of registration confirmation processing for the audit trail block. FIG. 12 is an illustration of processing for a user who has registered an audit trail block to examine whether or not the audit trail block has been registered. The blockchain 500 illustrated in FIG. 12 is assumed to be in a state after being updated in FIG. 7, that is, to be formed of the head block BL0 (not shown) and the blocks BL1 and BL2 being the audit trail blocks.

First, the terminal 104 transmits a registration confirmation request for the audit trail block to the blockchain server 103 of the inquiry destination identified by the hyperlink 1030 (Step S30). The blockchain 500 managed by the blockchain server 103 at the inquiry destination has the same information as those of the blockchains 500 of other blockchain servers 103, for example, the settlement bank 112, the auditing company 113, and the data analyst 114. Therefore, there is no problem in transmitting the registration confirmation request to any one of the blockchain servers 103.

The registration confirmation request includes any one of the hash value 703 of the personal information metadata 701 and the transaction ID 706. When the hash value 703 of the personal information metadata 701 is included, the audit trail block including the hash value 703 of the personal information metadata 701 in the transaction 612 becomes a block to be subjected to registration confirmation. Meanwhile, when the transaction ID 706 is included, the audit trail block including the transaction ID 706 in the transaction 612 becomes the block to be subjected to the registration confirmation.

In addition, which one of the hash value 703 of the personal information metadata 701 and the transaction ID 706 is to be included in the registration confirmation request may be set in advance, or may be selected by the user when the registration confirmation request is transmitted. In the following description, any one of the hash value 703 of the personal information metadata 701 and the transaction ID 706 included in the registration confirmation request is referred to as "registration confirmation data."

When the registration confirmation request is received by the second communication processing module 401, the blockchain server 103 controls the second data processing module 402 to search the blockchain 500 through use of the registration confirmation data included in the registration confirmation request (Step S40). In the example of FIG. 12, the block BL1 is the block including the audit result 503 (audit result block), and hence there is no hit irrespective of which one of the hash value 703 of the personal information metadata 701 and the transaction ID 706 is the registration confirmation data. Meanwhile, the block BL2 is the audit trail block, and includes both the hash value 703 of the personal information metadata 701 and the transaction ID 706. Therefore, the block BL2 is hit.

Then, the blockchain server 103 controls the second communication processing module 401 to notify the transaction 612 of the hit block BL2 to the terminal 104 at a transmission source of the registration confirmation request (Step S41). Thus, when the user of the terminal 104 receives the transaction 612 of the block BL2, the user of the terminal 104 can confirm the audit trail 707 in the transaction 612 of the block BL2.

### <Example of Registration Confirmation Request Screen>

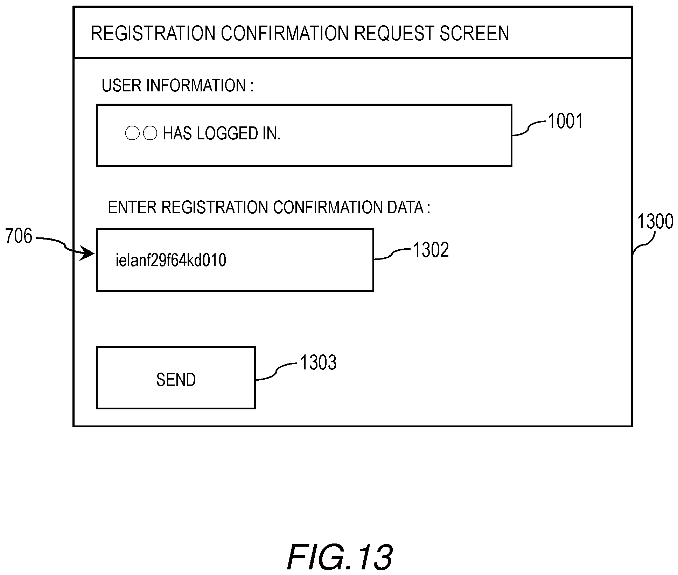

FIG. 13 is an explanatory diagram for illustrating an example of a registration confirmation request screen. The same components as those in FIG. 10 are denoted by the same reference numerals, and description thereof is omitted. A registration confirmation request screen 1300 is a screen displayed on the display of the terminal 104 based on, for example, information transmitted from the blockchain server 103 at the inquiry destination when the hyperlink 1030 is designated in FIG. 10 and FIG. 11.

The registration confirmation request screen 1300 includes the user information display area 1001, a registration confirmation data input area 1302, and a send button 1303. The registration confirmation data input area 1302 is an area for inputting any one of the hash value 703 of the personal information metadata 701 and the transaction ID 706. The send button 1303 is a button for transmitting, to the blockchain server 103, the registration confirmation request including the registration confirmation data input to the registration confirmation data input area 1302. When the send button 1303 is pressed through an operation of the terminal 104, the registration confirmation request including the registration confirmation data input to the registration confirmation data input area 1302 is transmitted from the terminal 104 to the blockchain server 103 (Step S30).

### <Example of Registration Confirmation Result Display Screen>

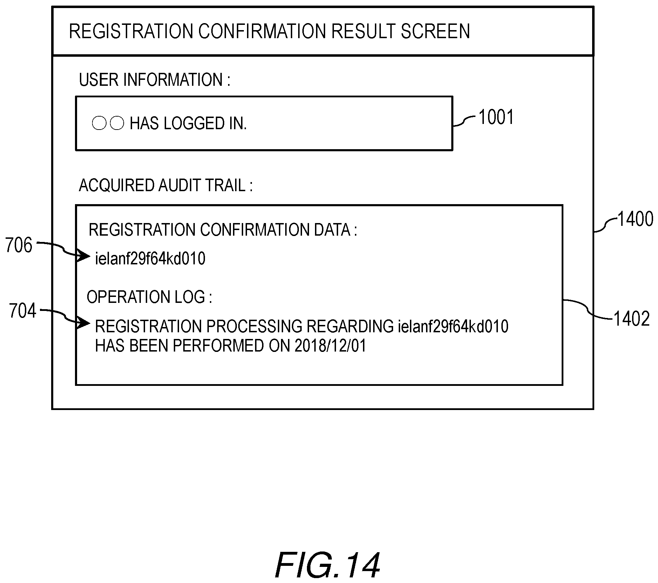

FIG. 14 is an explanatory diagram for illustrating an example of a registration confirmation result display screen. The same components as those in FIG. 10 are denoted by the same reference numerals, and description thereof is omitted. A registration confirmation result display screen 1400 is a screen displayed on the display of the terminal 104 when the transaction 612 of the hit block BL2 is received in Step S41 of FIG. 12. The registration confirmation result display screen 1400 includes the user information display area 1001 and an audit trail display area 1402. The audit trail display area 1402 includes the registration confirmation data (in FIG. 14, transaction ID 706 as an example) and the operation log 704. Thus, the user can confirm details of the operation log 704 indicating registration processing of the accompanying information 702 in the task processing server 101 associated with the transaction ID 706 of the registration confirmation data. Therefore, it is possible to refer to the audit trail 707 managed by the blockchain server 103 that cannot be tampered with, and hence it is possible to achieve the transaction of the accompanying information 702 that enables examination of whether or not a fraud has been committed by a third party.

### <Example of Audit Trail Block Generation Processing to be Performed When Accompanying Information 702 is Deleted>

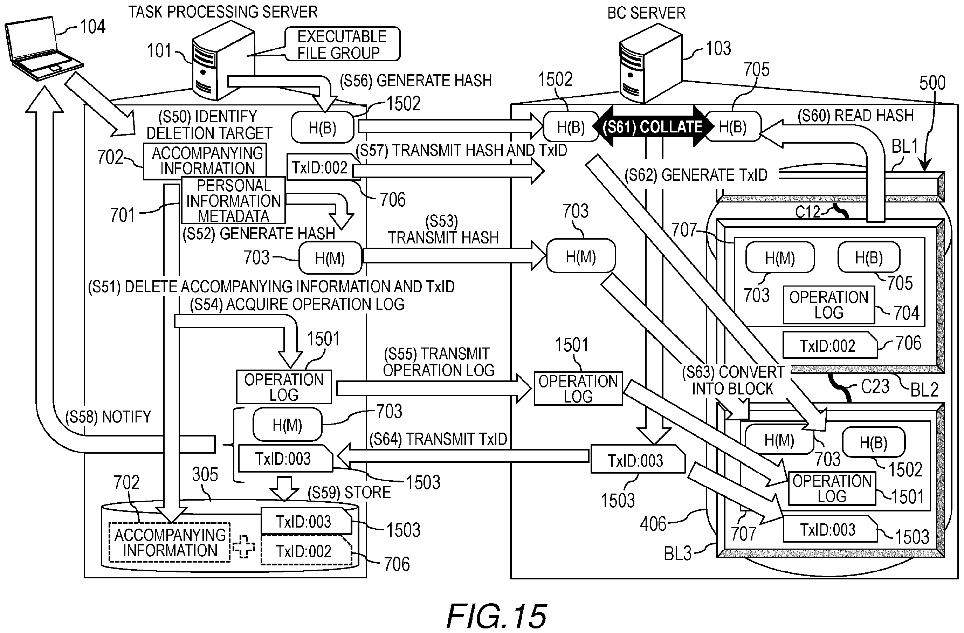

FIG. 15 is an explanatory diagram for illustrating an example of audit trail block generation processing to be performed when the accompanying information 702 is deleted. In the at least one embodiment, the user provides the personal information 700 to the task processing server 101, but the task processing server 101 controls the blockchain server 103 to manage the hash value 703 of the personal information metadata 701 of the personal information 700, and the accompanying information 702 is managed by the task processing server 101 itself. Therefore, when the task processing server 101 registers the accompanying information 702, the blockchain server 103 can register the audit trail 707 relating to the deletion of the accompanying information 702 in the blockchain 500.

The blockchain 500 illustrated in FIG. 15 is assumed to be in the state after being updated in FIG. 7, that is, to be formed of the head block BL0 (not shown) and the blocks BL1 and BL2 being the audit trail blocks.

The task processing server 101 controls the first communication processing module 301 to receive a deletion request for the terminal 104 from the terminal 104, and identifies a combination of the accompanying information 702 and the transaction ID that are to be deleted (Step S50). Examples of a pattern for deleting the accompanying information 702 include (1) a case in which the user wishes to delete a freely-selected piece of accompanying information 702 on the user, (2) a case in which the user wishes to delete all pieces of accompanying information 702 on the user, and (3) a case in which the user wishes to delete all pieces of accompanying information 702 on the user under a freely-selected type.

In the case of the deletion pattern (1), the deletion request includes the personal information metadata 701 on the user and the accompanying information 702 to be deleted. Thus, the task processing server 101 identifies the personal information management module 305 including the personal information metadata 701, identifies the accompanying information 702 to be deleted, which is stored in the identified personal information management module 305, and uniquely identifies the transaction ID 706 associated with the identified accompanying information 702 to be deleted.

In the case of the deletion pattern (2), the deletion request includes the personal information metadata 701 on the user. Thus, the task processing server 101 identifies the personal information management module 305 including the personal information metadata 701 and uniquely identifies a transaction ID group associated with all of pieces of the accompanying information 702 in the identified personal information management module 305.

In the case of the deletion pattern (3), the deletion request includes the personal information metadata 701 on the user and the type of the accompanying information 702 to be deleted. Thus, the task processing server 101 identifies the personal information management module 305 including the personal information metadata 701, identifies the accompanying information 702 which is stored in the identified personal information management module 305 and includes the type of the accompanying information 702 to be deleted, and uniquely identifies the transaction ID 706 associated with the identified accompanying information 702.

Then, the task processing server 101 deletes the combination of the identified accompanying information 702 and the transaction ID 706 from the personal information management module 305 regarding the user (Step S51). In FIG. 15, the deletion pattern (1) is described as an example.

Subsequently, the task processing server 101 controls the hash value generation processing module 304 to give the personal information metadata 701 to the hash function and generate the hash value 703 of the personal information metadata 701 (Step S52). Then, the task processing server 101 transmits the hash value 703 to all the blockchain servers 103 authenticated by the blockchain authentication server 102 (Step S53).

Further, the task processing server 101 controls the operation log acquisition processing module 303 to acquire an operation log 1501 of, for example, up to the deletion (Step S51) of the accompanying information 702 (Step S54), and transmits the operation log 1501 to all the blockchain servers 103 authenticated by the blockchain authentication server 102 (Step S55).

Further, the task processing server 101 controls the first data processing module 302 to read the designated executable file by being triggered by the identification of a deletion target (Step S50), and controls the hash value generation processing module 304 to generate a hash value 1502 of the designated executable file (Step S56). Then, the task processing server 101 controls the first communication processing module 301 to transmit the transaction ID 706 associated with the hash value 1502 and the accompanying information 702 to be deleted to all the blockchain servers 103 authenticated by the blockchain authentication server 102 (Step S57).

When the hash value 705 is received by the second communication processing module 401, the blockchain server 103 controls the second data processing module 402 to read the hash value 705 of the designated executable file from the latest audit trail block BL2 stored in the BC storage module 406 (Step S60).

Then, the blockchain server 103 controls the collating module 403 to collate both the hash values 1502 and 705, that is, determines whether or not both the hash values 1502 and 705 match each other (Step S61). When both the hash values 1502 and 705 do not match each other, the collation fails, and hence the processing is brought to an end without generating a new block BL3. In this case, the blockchain server 103 notifies the terminal 104 of a deletion failure through intermediation of the task processing server 101. In this case, the user who has been notified of the deletion failure requests the auditing company 113 to conduct an audit on the information bank 111 again.

Meanwhile, when both the hash values 1502 and 705 match each other, the blockchain server 103 controls the TxID generation module 404 to generate a transaction ID 1503 (Step S62). In this case, the generated transaction ID 1503 is set to have a value of "003" as an example. The transaction ID 1503 is assumed to have the same value as that of the transaction ID 1503 generated by another blockchain server 103.

Subsequently, the blockchain server 103 controls the block generation module 405 to generate the block BL3 and associate the block BL3 with the block BL2, to thereby update the blockchain 500 (Step S63). The block BL3 sets the hash value 703 of the personal information metadata 701, the operation log 1501, and the hash value 1502 of the designated executable file as the audit trail 707. The audit trail 707 and the transaction ID 1503 correspond to the transaction 612 of the block BL3.

The block BL3 is associated with the block BL2 generated immediately before by a chain C23. The chain C23 is the (*N-1*)th block hash value 623 included in the header of the block BL3, that is, the hash value of the block BL2.

The blockchain server 103 also controls the second communication processing module 401 to transmit the transaction ID 1503 to the task processing server 101 (Step S64). The blockchain server 103 is set to transmit the transaction ID 1503 to the task processing server 101 after updating the blockchain 500, to thereby be able to guarantee that the update of the blockchain 500 has been completed.

After that, the task processing server 101 controls the first communication processing module 301 to receive the transaction ID 1503 from the blockchain server 103, and notify the terminal 104 of the received transaction ID 1503 and the hash value 703 of the personal information metadata 701 (Step S58). This enables the user to confirm that the audit trail 707 relating to the deletion of the accompanying information 702 has been successfully registered.

The task processing server 101 also controls the first data processing module 302 to store the received transaction ID 1503 in the personal information management module 305 (Step S59). The transaction ID 1503 is information for identifying the audit trail 707 relating to the deletion of the accompanying information 702, and hence the accompanying information 702 associated with the transaction ID 1503 is not present.

In addition, in FIG. 15, the processing has been described in the order of the deletion of the accompanying information 702 and the transaction ID 706 (Step S51) → the operation log acquisition (Step S54) → the collation (Step S61) → the conversion of the audit trail 707 into a block (Step S63). However, when there is a mismatch in the collation (Step S61), the audit trail 707 cannot be converted into a block (Step S63) even after the accompanying information 702 and the transaction ID 706 are deleted (Step S51).

Therefore, the processing may be executed in the order of the collation (Step S61) → the deletion of the accompanying information 702 and the transaction ID 706 (Step S51) → the operation log acquisition (Step S54) → the conversion of the audit trail 707 into a block (Step S63). In this case, the blockchain server 103 notifies the task processing server 101 of a collation result, and only when the collation result is that the hash values 1502 and 705 match each other, the task processing server 101 deletes the accompanying information 702 and the transaction ID 706 (Step S51).

Thus, even when there is a mismatch in the collation (Step S61), the accompanying information 702 and the transaction ID 706 are not deleted (Step S51). Therefore, it is possible to avoid the state in which the audit trail 707 cannot be converted into a block (Step S63) even after the accompanying information 702 and the transaction ID 706 are deleted (Step S51).

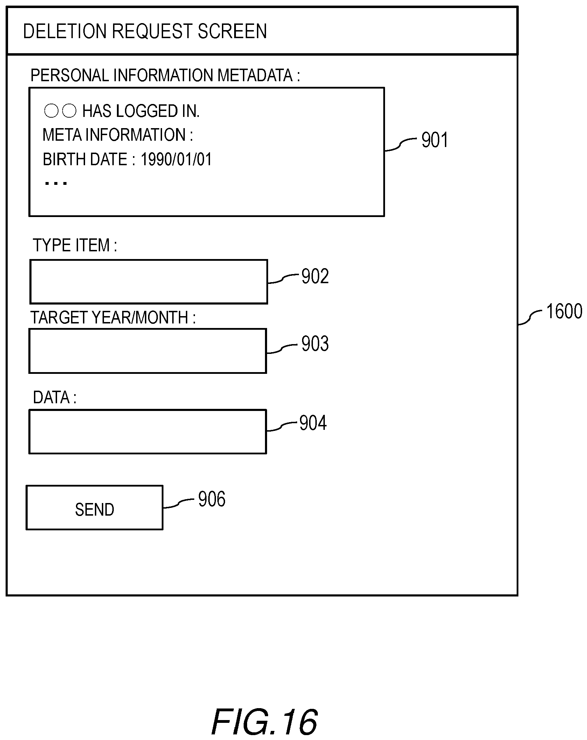

FIG. 16 is an explanatory diagram for illustrating an example of a deletion request screen for the accompanying information 702. The same components as those in FIG. 9 are denoted by the same reference numerals, and description thereof is omitted. A deletion request screen 1600 is a screen displayed on the display of the terminal 104 to input the deletion request from the terminal 104 to the task processing server 101 in FIG. 15.

When the send button 906 is pressed with all the type item selection pull-down 902, the target year/month selection pull-down 903, and the data input area 904 being selected and input, a deletion request including the personal information metadata 701 and the accompanying information 702 formed of the type and the numerical value is transmitted to the task processing server 101. In this case, the task processing server 101 identifies the accompanying information 702 and the transaction ID 706 as deletion targets (the above-mentioned deletion pattern (1)).

When the send button 906 is pressed without any one of the type item selection pull-down 902, the target year/month selection pull-down 903, and the data input area 904 being selected and input, a deletion request including the personal information metadata 701 is transmitted to the task processing server 101. In this case, the task processing server 101 identifies, as deletion targets, all pieces of accompanying information 702 and a transaction ID group relating thereto in the personal information management module 305 including the personal information metadata 701 (the above-mentioned deletion pattern (2)).

When the send button 906 is pressed with at least one of the type item selection pull-down 902 or the target year/month selection pull-down 903 being selected as the type and without the data input area 904 being input, a deletion request including the personal information metadata 701 and the accompanying information 702 formed only of the selected type is transmitted to the task processing server 101. In this case, the task processing server 101 identifies, as deletion targets, all pieces of accompanying information 702 corresponding to the selected type in the personal information management module 305 including the personal information metadata 701 and a transaction ID group relating thereto (the above-mentioned deletion pattern (3)).

### <Example of Deletion Failure Screen>

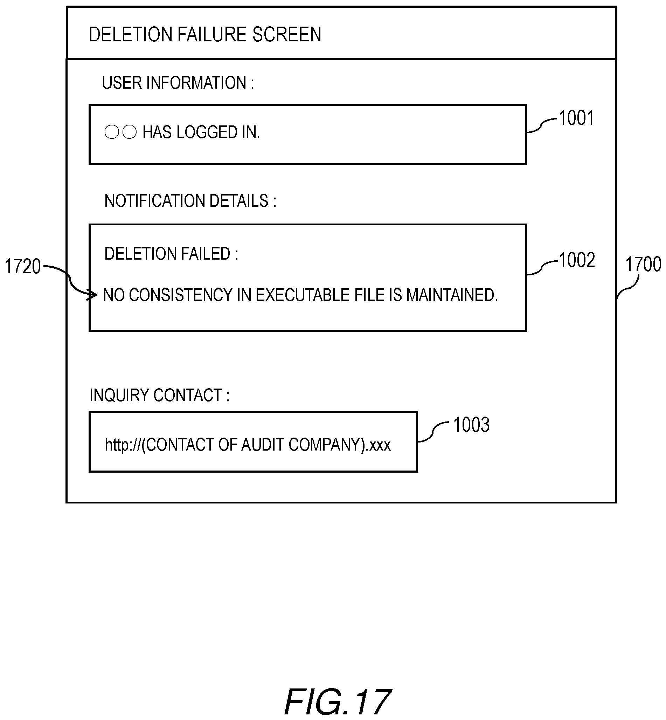

FIG. 17 is an explanatory diagram for illustrating an example of a deletion failure screen. The same components as those in FIG. 10 are denoted by the same reference numerals, and description thereof is omitted. A deletion failure screen 1700 is a screen displayed on the display of the terminal 104 when, for example, the blockchain server 103 determines that both the hash values 1502 and 705 do not match each other in Step S61 of FIG. 15 and a notification of the deletion failure is transmitted to the terminal 104 through intermediation of the task processing server 101. In FIG. 17, the deletion failure screen 1700 is illustrated, and hence a character string 1720 indicating the deletion failure corresponds to the notification details.

### <Example of Deletion Success Screen>

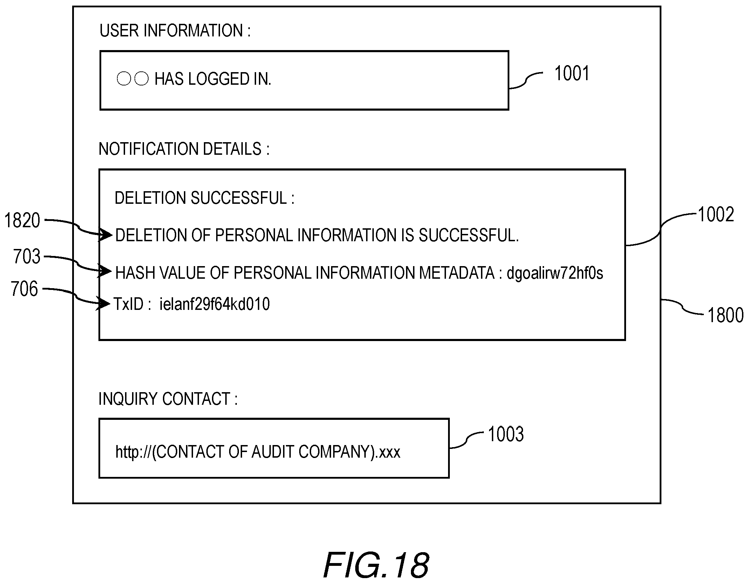

FIG. 18 is an explanatory diagram for illustrating an example of a deletion success screen. The same components as those in FIG. 10 are denoted by the same reference numerals, and description thereof is omitted. A deletion success screen 1800 is a screen displayed on the display of the terminal 104 when, for example, the blockchain server 103 determines that both the hash values 1502 and 705 do not match each other in Step S61 of FIG. 15 and a notification of the deletion success is transmitted to the terminal 104 through intermediation of the task processing server 101 (Step S58). FIG. 18 is the deletion success screen 1800, and hence the notification details include a character string 1820 indicating a deletion success, the hash value 703 of the personal information metadata 701, and the deleted transaction ID 706.

In a case in which it is to be examined whether or not the accompanying information 702 has been deleted, as described with reference to FIG. 13, for example, when the hyperlink 1030 is designated in FIG. 16 and FIG. 17, a deletion confirmation screen may be displayed on the display of the terminal 104 based on the information transmitted from the blockchain server 103 at the inquiry destination. Thus, the user can also examine whether or not the accompanying information 702 has been deleted through the same processing as in the case illustrated in FIG. 12.

In the at least one embodiment described above, the task processing server 101 controls the hash value generation processing module 304 to generate the hash value 703 of the personal information metadata 701, but may control the first data processing module 302 to encrypt or compress the personal information metadata 701. The task processing server 101 may transmit the personal information metadata 701 as it is to the blockchain server 103, and the blockchain server 103 may encrypt or compress the personal information metadata 701. Thus, in the same manner as the hash value 703, the personal information metadata 701 can be prevented from being registered in plaintext in the block, to thereby be able to protect the personal information 700.

When permission to register the personal information metadata 701 in plaintext in the block has been given by the user, the blockchain server 103 may register the personal information metadata 701 as it is in plaintext in the block without converting the personal information metadata 701 into a hash value or encrypting or compressing the personal information metadata 701.
(1) As described above, the above-mentioned personal information management system 100 includes: the blockchain server 103 configured to store the blockchain 500 including, for each block BL*N*, the transaction 512 and a transaction ID for identifying the transaction 612; and the task processing server 101 configured to access the blockchain server 103.

The task processing server 101 is configured to store the accompanying information 702, which accompanies the personal information metadata 701 for identifying an individual, in association with the transaction ID 706 received from the blockchain server 103. The blockchain server 103 is configured to generate the transaction ID 706, generate the block BL2 including the hash value 703 which is based on the personal information metadata 701 and the transaction ID 706, add the block BL2 to the blockchain 500, and transmit the transaction ID 706 to the task processing server 101.

It is possible to examine whether or not a fraud has been committed and to delete the accompanying information 702. Therefore, laws and regulations relating to the personal information 700 can be met. For example, Article 17 "Right to be forgotten" of the EU General Data Protection Regulation can be met.

(2) Further, in the personal information management system 100 of the item (1), the task processing server 101 may be configured to transmit the operation log 704 storing the accompanying information 702 to the blockchain server 103, and when the blockchain server 103 receives the operation log 704 from the task processing server 101, the blockchain server 103 may be configured to generate the block BL2 including the hash value 703 which is based on the personal information metadata 701, the transaction ID 706, and the operation log 704, add the block BL2 to the blockchain 500, and transmit the transaction ID 706 to the task processing server 101.

With this configuration, the operation log 704 relating to storage processing carried out as the personal information transaction by the information bank 111 being the personal information management entity is managed by the blockchain 500 under a state of being unable to be tampered with. It is also possible to achieve the personal information transaction that enables examination of whether or not a fraud has been committed by a third party, and the accompanying information 702 is managed under a state of being able to be deleted. Therefore, the laws and regulations relating to the personal information 700 can be met.

(3) Further, in the personal information management system 100 of the item (1), the task processing server 101 is configured to generate the first piece of converted data which is based on the personal information metadata 701, and transmit the first piece of converted data to the blockchain server 103. The blockchain server 103 is configured to generate a first block including the first piece of converted data transmitted from the task processing server 101 and the transaction ID 706, add the first block to the blockchain 500, and transmit the transaction ID 706 to the task processing server 101.

With this configuration, the personal information metadata 701 can be concealed and stored in the blockchain 500.

(4) Further, in the personal information management system 100 of the item (3), the first piece of converted data is the hash value 703 of the personal information metadata 701. This inhibits the personal information metadata 701 from being inferred even when the hash value 703 is disclosed.

(5) Further, in the personal information management system 100 of the item (1), the task processing server 101 is configured to transmit, to the blockchain server 103, the hash value 705 which is based on the executable files of the personal information management processing (first communication processing module 301, first data processing module 302, operation log acquisition processing module 303, and hash value generation processing module 304) for information on at least one of the personal information metadata 701 or the accompanying information 702.

When the hash value 705 is received from the task processing server 101, the blockchain server 103 collates the hash value 705 with the hash value 502 already included in any one of the blocks BL*N* of the blockchain 500. Then, when both the hash values 705 and 502 match each other, the blockchain server 103 generates the block BL2 including the hash value 703, the transaction ID 706, and the hash value 705, adds the block BL2 to the blockchain 500, and transmits the transaction ID 706 to the task processing server 101.

(6) Further, in the personal information management system 100 of the item (1), the task processing server 101 is configured to transmit at least one of the transaction ID 706 or a first piece of converted data (hash value 703) to the terminal 104 used by the individual.

With this configuration, it is possible to examine whether or not the accompanying information has been successfully registered in the blockchain server 103.

(7) Further, in the personal information management system 100 of the item (1), the blockchain server 103 is configured to search the blockchain 500 for a block including the transaction ID 706 based on the transaction ID 706 received from the terminal 104 used by the individual, and transmit a result of the search to the terminal 104.

This configuration allows the user to examine whether or not the registration has been successful.

(8) Further, in the personal information management system 100 of the item (1), the blockchain server 103 is configured to search the blockchain 500 for a block BL1 including the first piece of converted data (hash value 703) based on the first piece of converted data (hash value 703) received from the terminal 104 used by the individual, and transmit a result of the search to the terminal 104.

This configuration allows the user to examine whether or not a freely-selected piece of accompanying information 702 has been successfully registered.

(9) Further, in the personal information management system 100 of the item (1), the task processing server 101 is configured to transmit the transaction ID 706 associated with the accompanying information 702 to the blockchain server 103, delete the accompanying information 702 and the transaction ID 706, and store the transaction ID 1503 received from the blockchain server 103. The blockchain server 103 is configured to generate the transaction ID 1503, generate the block BL2 including the first piece of converted data (hash value 703) and the transaction ID 1503, add the block BL2 to the blockchain 500, and transmit the transaction ID 1503 to the task processing server 101.

With this configuration, it is possible to add the audit trail relating to the deletion to the blockchain 500 while deleting a freely-selected piece of accompanying information 702 on the user, to thereby facilitate the examination of whether or not a fraud has been committed.

(10) Further, in the personal information management system 100 of the item (1), the task processing server 101 is configured to transmit the first piece of converted data (hash value 703) to the blockchain server 103, delete the accompanying information 702 associated with the transaction ID 706, and store the transaction ID 1503 received from the blockchain server 103. The blockchain server 103 is configured to generate the transaction ID 1503, generate the block BL2 including the first piece of converted data (hash value 703) and the transaction ID 1503, add the block BL2 to the blockchain 500, and transmit the transaction ID 1503 to the task processing server 101.

With this configuration, it is possible to add the audit trail relating to the deletion to the blockchain 500 while deleting all of pieces of accompanying information 702 on the user, to thereby facilitate the examination of whether or not a fraud has been committed.

(11) Further, in the personal information management system 100 of the item (1), the task processing server 101 is configured to identify, based on a type of the accompanying information 702, the accompanying information 702 corresponding to the type from a set of the pieces of accompanying information 702, identify the transaction ID 706 associated with the identified accompanying information 702, transmit the transaction ID 706 to the blockchain server 103, delete the identified accompanying information 702 from the set of the pieces of accompanying information 702, and store the transaction ID 1503 received from the blockchain server 103.

The blockchain server 103 is configured to generate the transaction ID 1503, generate the block BL2 including the first piece of converted data (hash value 703) and the transaction ID 1503, add the block BL2 to the blockchain 500, and transmit the transaction ID 1503 to the task processing server 101.

With this configuration, it is possible to add the audit trail relating to the deletion to the blockchain 500 while deleting pieces of accompanying information 702 on the user in units of types, to thereby facilitate the examination of whether or not a fraud has been committed.

(12) Further, in the personal information management system 100 of the item (9), the task processing server 101 is configured to transmit the transaction ID 1503 to the terminal 104 used by the individual.

With this configuration, it is possible to add the audit trail relating to the deletion to the blockchain 500 while deleting pieces of accompanying information 702 on the user in units of types, to thereby facilitate the examination of whether or not a fraud has been committed.

(13) Further, in the personal information management system 100 of the item (12), the blockchain server 103 is configured to search the blockchain 500 for a block including the transaction ID 1503 based on the transaction ID 1503 received from the terminal 104 used by the individual, and transmit a result of the search to the terminal 104.

This configuration allows the user to examine whether or not a freely-selected piece of accompanying information 702 has been successfully deleted.

## Claims

1. A personal information management system, comprising:
a blockchain server (103) configured to store a blockchain (500) including, for each block, a transaction and a transaction ID for identifying the transaction; and
a personal information management apparatus (101) configured to access the blockchain server (103), wherein
the personal information management apparatus (101) is configured to store a second piece of personal information on an individual, which accompanies a first piece of personal information for identifying the individual, in association with a first transaction ID received from the blockchain server (103), wherein
the personal information management apparatus (101) is configured to transmit the first transaction ID associated with the second piece of personal information to the blockchain server (103), delete the second piece of personal information and the first transaction ID, and store, after having transmitted the first transaction ID, a second transaction ID received from the blockchain server (103), wherein
the blockchain server (103) is configured to generate the first transaction ID, generate a first block (BL1) including a first piece of converted data which is based on the first piece of personal information and the first transaction ID, add the first block (BL1) to the blockchain (500), and transmit the first transaction ID to the personal information management apparatus (101), and wherein
the blockchain server (103) is configured to in response to receiving the first transaction ID from the personal information management apparatus generate the second transaction ID, generate a second block (BL2) including the first piece of converted data and the second transaction ID, add the second block (BL2) to the blockchain (500), and transmit the second transaction ID to the personal information management apparatus (101).

2. The personal information management system according to claim 1, wherein
the personal information management apparatus (101) is configured to transmit, to the blockchain server (103), a log relating to personal information management processing for the second piece of personal information, and wherein
the blockchain server (103) is configured to generate, when the log is received from the personal information management apparatus (101), the first block (BL1) including the first piece of converted data, the first transaction ID, and the log, add the first block (BL1) to the blockchain (500), and transmit the first transaction ID to the personal information management apparatus (101).

3. The personal information management system according to claim 1, wherein
the personal information management apparatus (101) is configured to generate the first piece of converted data which is based on the first piece of personal information, and transmit the first piece of converted data to the blockchain server (103), and wherein
the blockchain server (103) is configured to generate the first block (BL1) including the first piece of converted data transmitted from the personal information management apparatus (101) and the first transaction ID, add the first block (BL1) to the blockchain (500), and transmit the first transaction ID to the personal information management apparatus (101).

4. The personal information management system according to claim 3, wherein
the first piece of converted data is a hash value (703) of the first piece of personal information.

5. The personal information management system according to claim 1, wherein
the personal information management apparatus (101) is configured to transmit, to the blockchain server (103), a second piece of converted data which is based on an executable file of personal information management processing relating to information on at least one of the first piece of personal information or the second piece of personal information, and wherein
the blockchain server (103) is configured to:
collate, when the second piece of converted data is received from the personal information management apparatus (101), the second piece of converted data with another piece of converted data already included in any one of blocks of the blockchain (500); and
generate, when both the second pieces of converted data match each other, the first block (BL1) including the first piece of converted data, the first transaction ID, and the second piece of converted data, add the first block (BL1) to the blockchain (500), and transmit the first transaction ID to the personal information management apparatus (101).

6. The personal information management system according to claim 1, wherein
the personal information management apparatus (101) is configured to transmit, to a terminal (104) used by the individual, data on at least one of the first transaction ID or the first piece of converted data.

7. The personal information management system according to claim 1, wherein
the blockchain server (103) is configured to search the blockchain (500) for a block including the first transaction ID based on the first transaction ID received from a terminal (104) used by the individual, and transmit a result of the search to the terminal (104).

8. The personal information management system according to claim 1, wherein
the blockchain server (103) is configured to search the blockchain (500) for a block including the first piece of converted data based on the first piece of converted data received from a terminal (104) used by the individual, and transmit a result of the search to the terminal (104).

9. The personal information management system according to claim 1, wherein
the personal information management apparatus (101) is configured to transmit the first piece of converted data to the blockchain server (103), delete the second piece of personal information associated with the first transaction ID, and store a second transaction ID received from the blockchain server (103), and wherein
the blockchain server (103) is configured to generate the second transaction ID, generate a second block (BL2) including the first piece of converted data and the second transaction ID, add the second block (BL2) to the blockchain (500), and transmit the second transaction ID to the personal information management apparatus (101).

10. The personal information management system according to claim 1, wherein
the personal information management apparatus (101) is configured to identify, based on a type of the second piece of personal information, a second piece of personal information corresponding to the type from a set of the second pieces of personal information, identify the first transaction ID associated with the identified second piece of personal information, transmit the first transaction ID to the blockchain server (103), delete the identified second piece of personal information from the set of the second pieces of personal information, and store a second transaction ID received from the blockchain server (103), and wherein
the blockchain server (103) is configured to generate the second transaction ID, generate a second block (BL2) including the first piece of converted data and the second transaction ID, add the second block (BL2) to the blockchain (500), and transmit the second transaction ID to the personal information management apparatus (101).

11. The personal information management system according to claim 1, wherein
the personal information management apparatus (101) is configured to transmit the second transaction ID to a terminal (104) used by the individual.

12. The personal information management system according to claim 11, wherein
the blockchain server (103) is configured to search the blockchain (500) for a block including the second transaction ID based on the second transaction ID received from a terminal (104) used by the individual, and transmit a result of the search to the terminal (104).

13. A personal information management apparatus (101), which is configured to access a blockchain server (103) configured to store a blockchain (500) including, for each block, a transaction and a transaction ID for identifying the transaction, the personal information management apparatus (101) comprising:
a processor (201) configured to execute a program;
a storage device (202) configured to store the program; and
a communication interface (205) configured to communicate to/from the blockchain server (103), wherein
the processor (201) is configured to:
generate converted data which is based on a first piece of personal information for identifying an individual, and transmit the converted data to the blockchain server (103);
receive a first transaction ID from the blockchain server (103) as a result of transmitting the converted data to the blockchain server (103); and
store a second piece of personal information on the individual, which accompanies the first piece of personal information, in the storage device (202) in association with the first transaction ID received from the blockchain server (103), transmit the first transaction ID associated with the second piece of personal information to the blockchain server (103), delete the second piece of personal information and the first transaction ID, and store, after having transmitted the first transaction ID, a second transaction ID received from the blockchain server (103).

14. A personal information management method, which is executed by a personal information management system,
the personal information management system comprising:
a blockchain server (103) configured to store a blockchain (500) including, for each block, a transaction and a transaction ID for identifying the transaction; and
a personal information management apparatus (101) configured to access the blockchain server (103),
the personal information management method comprising:
storing, by the personal information management apparatus (101), a second piece of personal information on an individual, which accompanies a first piece of personal information for identifying the individual, in association with a first transaction ID received from the blockchain server (103);
by the personal information management apparatus, transmitting the first transaction ID associated with the second piece of personal information to the blockchain server (103), deleting the second piece of personal information and the first transaction ID, and storing a second transaction ID received from the blockchain server (103),
generating, by the blockchain server (103), the first transaction ID, generating a first block (BL1) including a piece of converted data which is based on the first piece of personal information and the first transaction ID, adding the first block (BL1) to the blockchain (500), and transmitting the first transaction ID to the personal information management apparatus (101), and
generating, by the blockchain server (103), in response to receiving the first transaction ID from the personal information management apparatus, the second transaction ID, a second block (BL2) including the first piece of converted data and the second transaction ID, adding the second block (BL2) to the blockchain (500), and transmitting the second transaction ID to the personal information management apparatus (101).

## Patentansprüche

1. System für das Management persönlicher Daten, das umfasst:
einen Blockchain-Server (103), der konfiguriert ist, eine Blockchain (500) zu speichern, die für jeden Block eine Transaktion und eine Transaktions-ID zum Identifizieren der Transaktion enthält; und
eine Vorrichtung für das Management persönlicher Daten (101), die konfiguriert ist, auf den Blockchain-Server (103) zuzugreifen, wobei
die Vorrichtung für das Management persönlicher Daten (101) konfiguriert ist, einen zweiten Teil persönlicher Daten über eine Person, der einen ersten Teil persönlicher Daten zum Identifizieren der Person begleitet, in Verbindung mit einer von dem Blockchain-Server (103) empfangenen ersten Transaktions-ID zu speichern, wobei
die Vorrichtung für das Management persönlicher Daten (101) konfiguriert ist, die erste Transaktions-ID, die dem zweiten Teil persönlicher Daten zugeordnet ist, an den Blockchain-Server (103) zu senden, den zweiten Teil persönlicher Daten und die erste Transaktions-ID zu löschen und, nachdem sie die erste Transaktions-ID gesendet hat, eine von dem Blockchain-Server (103) empfangene zweite Transaktions-ID zu speichern, wobei
der Blockchain-Server (103) konfiguriert ist, die erste Transaktions-ID zu erzeugen, einen ersten Block (BL1) zu erzeugen, der einen ersten Teil umgesetzter Daten enthält, die auf dem ersten Teil persönlicher Daten und der ersten Transaktions-ID beruhen, den ersten Block (BL1) zu der Blockchain (500) hinzuzufügen und die erste Transaktions-ID an die Vorrichtung für das Management persönlicher Daten (101) zu senden, und wobei
der Blockchain-Server (103) konfiguriert ist, als Reaktion auf das Empfangen der ersten Transaktions-ID von der Vorrichtung für das Management persönlicher Daten die zweite Transaktions-ID zu erzeugen, einen zweiten Block (BL2) zu erzeugen, der den ersten Teil umgesetzter Daten und die zweite Transaktions-ID enthält, den zweiten Block (BL2) zu der Blockchain (500) hinzuzufügen und die zweite Transaktions-ID an die Vorrichtung für das Management persönlicher Daten (101) zu senden.

2. System für das Management persönlicher Daten nach Anspruch 1, wobei
die Vorrichtung für das Management persönlicher Daten (101) konfiguriert ist, an den Blockchain-Server (103) ein Protokoll bezüglich der Verarbeitung für das Management persönlicher Daten für den zweiten Teil persönlicher Daten zu senden, und wobei
der Blockchain-Server (103) konfiguriert ist, dann, wenn das Protokoll von der Vorrichtung für das Management persönlicher Daten (101) empfangen wird, den ersten Block (BL1), der den ersten Teil umgesetzter Daten, die erste Transaktions-ID und das Protokoll enthält, zu erzeugen, den ersten Block (BL1) zu der Blockchain (500) hinzuzufügen und die erste Transaktions-ID an die Vorrichtung für das Management persönlicher Daten (101) zu senden.

3. System für das Management persönlicher Daten nach Anspruch 1, wobei
die Vorrichtung für das Management persönlicher Daten (101) konfiguriert ist, den ersten Teil umgesetzter Daten, der auf dem ersten Teil persönlicher Daten beruht, zu erzeugen und den ersten Teil umgesetzter Daten an den Blockchain-Server (103) zu senden, und wobei
der Blockchain-Server (103) konfiguriert ist, den ersten Block (BL1), der den ersten Teil umgesetzter Daten, der von der Vorrichtung für das Management persönlicher Daten (101) gesendet wurde, und die erste Transaktions-ID enthält, zu erzeugen, den ersten Block (BL1) zu der Blockchain (500) hinzuzufügen und die erste Transaktions-ID an die Vorrichtung für das Management persönlicher Daten (101) zu senden.

4. System für das Management persönlicher Daten nach Anspruch 3, wobei
der erste Teil umgesetzter Daten ein Hash-Wert (703) des ersten Teils persönlicher Daten ist.

5. System für das Management persönlicher Daten nach Anspruch 1, wobei
die Vorrichtung für das Management persönlicher Daten (101) konfiguriert ist, an den Blockchain-Server (103) einen zweiten Teil umgesetzter Daten, der auf einer ausführbaren Datei der Verarbeitung für das Management persönlicher Daten bezüglich Daten über den ersten Teil persönlicher Daten und/oder den zweiten Teil persönlicher Daten beruht, zu senden, und wobei
der Blockchain-Server (103) konfiguriert ist zum:
Vereinigen dann, wenn der zweite Teil umgesetzter Daten von der Vorrichtung für das Management persönlicher Daten (101) empfangen wird, des zweiten Teils umgesetzter Daten mit einem anderen Teil umgesetzter Daten, der bereits in einem der Blöcke der Blockchain (500) enthalten ist; und
Erzeugen dann, wenn beide zweiten Teile umgesetzter Daten miteinander übereinstimmen, des ersten Blocks (BL1), der den ersten Teil umgesetzter Daten, die erste Transaktions-ID und den zweiten Teil umgesetzter Daten enthält, Hinzufügen des ersten Blocks (BL1) zu der Blockchain (500) und Senden der ersten Transaktions-ID an die Vorrichtung für das Management persönlicher Daten (101).

6. System für das Management persönlicher Daten nach Anspruch 1, wobei
die Vorrichtung für das Management persönlicher Daten (101) konfiguriert ist, an ein Endgerät (104), das von einer Person verwendet wird, Daten über die erste Transaktions-ID und/oder den ersten Teil umgesetzter Daten zu senden.

7. System für das Management persönlicher Daten nach Anspruch 1, wobei
der Blockchain-Server (103) konfiguriert ist, die Blockchain (500) nach einem Block, der die erste Transaktions-ID enthält, anhand der von einem Endgerät (104), das von einer Person verwendet wird, empfangenen ersten Transaktions-ID zu durchsuchen und ein Ergebnis der Suche an das Endgerät (104) zu senden.

8. System für das Management persönlicher Daten nach Anspruch 1, wobei
der Blockchain-Server (103) konfiguriert ist, die Blockchain (500) nach einem Block, der den ersten Teil umgesetzter Daten enthält, anhand des von einem Endgerät (104), das von einer Person verwendet wird, empfangenen ersten Teils umgesetzter Daten zu durchsuchen und ein Ergebnis der Suche an das Endgerät (104) zu senden.

9. System für das Management persönlicher Daten nach Anspruch 1, wobei
die Vorrichtung für das Management persönlicher Daten (101) konfiguriert ist, den ersten Teil umgesetzter Daten an den Blockchain-Server (103) zu senden, den zweiten Teil persönlicher Daten, der der ersten Transaktions-ID zugeordnet ist, zu löschen und eine von dem Blockchain-Server (103) empfangene zweite Transaktions-ID zu speichern, und wobei
der Blockchain-Server (103) konfiguriert ist, die zweite Transaktions-ID zu erzeugen, einen zweiten Block (BL2), der den ersten Teil umgesetzter Daten und die zweite Transaktions-ID enthält, zu erzeugen, den zweiten Block (BL2) zu der Blockchain (500) hinzuzufügen und die zweite Transaktions-ID an die Vorrichtung für das Management persönlicher Daten (101) zu senden.

10. System für das Management persönlicher Daten nach Anspruch 1, wobei
die Vorrichtung für das Management persönlicher Daten (101) konfiguriert ist, anhand eines Typs des zweiten Teils persönlicher Daten einen zweiten Teil persönlicher Daten, der dem Typ entspricht, aus einer Gruppe der zweiten Teile persönlicher Daten zu identifizieren, die erste Transaktions-ID, die dem identifizierten zweiten Teil persönlicher Daten zugeordnet ist, zu identifizieren, die erste Transaktions-ID an den Blockchain-Server (103) zu senden, den identifizierten zweiten Teil persönlicher Daten aus der Gruppe der zweiten Teile persönlicher Daten zu löschen und eine von dem Blockchain-Server (103) empfangene zweite Transaktions-ID zu speichern, und wobei
der Blockchain-Server (103) konfiguriert ist, die zweite Transaktions-ID zu erzeugen, einen zweiten Block (BL2), der den ersten Teil umgesetzter Daten und die zweite Transaktions-ID enthält, zu erzeugen, den zweiten Block (BL2) zu der Blockchain (500) hinzuzufügen und die zweite Transaktions-ID an die Vorrichtung für das Management persönlicher Daten zu senden.

11. System für das Management persönlicher Daten nach Anspruch 1, wobei
die Vorrichtung für das Management persönlicher Daten (101) konfiguriert ist, die zweite Transaktions-ID an ein Endgerät (104), das durch das Person verwendet wird, zu senden.

12. System für das Management persönlicher Daten nach Anspruch 11, wobei
der Blockchain-Server (103) konfiguriert ist, die Blockchain (500) nach einem Block, der die zweite Transaktions-ID enthält, anhand der von einem Endgerät (104), das von einer Person verwendet wird, empfangenen zweiten Transaktions-ID zu durchsuchen und ein Ergebnis der Suche an das Endgerät (104) zu senden.

13. Vorrichtung für das Management persönlicher Daten (101), die konfiguriert ist, auf einen Blockchain-Server (103) zuzugreifen, der konfiguriert ist, eine Blockchain (500) zu speichern, die für jeden Block eine Transaktion und eine Transaktions-ID zum Identifizieren der Transaktion enthält, wobei die Vorrichtung für das Management persönlicher Daten (101) umfasst:
einen Prozessor (201), der konfiguriert ist, ein Programm auszuführen;
eine Speichervorrichtung (202), die konfiguriert ist, das Programm zu speichern; und
eine Kommunikationsschnittstelle (205), die konfiguriert ist, zu/von dem Blockchain-Server (103) zu kommunizieren, wobei
der Prozessor (201) konfiguriert ist zum:
Erzeugen umgesetzter Daten, die auf einem ersten Teil persönlicher Daten zum Identifizieren einer Person beruhen, und Senden der umgesetzten Daten an den Blockchain-Server (103);
Empfangen einer ersten Transaktions-ID von dem Blockchain-Server (103) als ein Ergebnis des Sendens der umgesetzten Daten an den Blockchain-Server (103); und
Speichern eines zweiten Teils persönlicher Daten über die Person, der den ersten Teil persönlicher Daten begleitet, in die Speichervorrichtung (202) in Verbindung mit der von dem Blockchain-Server (103) empfangenen ersten Transaktions-ID,
Senden der ersten Transaktions-ID, die dem zweiten Teil persönlicher Daten zugeordnet ist, an den Blockchain-Server (103), Löschen des zweiten Teils persönlicher Daten und der ersten Transaktions-ID und Speichern, nachdem die erste Transaktions-ID gesendet wurde, einer von dem Blockchain-Server (103) empfangenen zweiten Transaktions-ID.

14. Verfahren für das Management persönlicher Daten, das durch ein System für das Management persönlicher Daten ausgeführt wird,
wobei das System für das Management persönlicher Daten umfasst:
einen Blockchain-Server (103), der konfiguriert ist, eine Blockchain (500) zu speichern, die für jeden Block eine Transaktion und eine Transaktions-ID zum Identifizieren der Transaktion enthält; und
eine Vorrichtung für das Management persönlicher Daten (101), die konfiguriert ist, auf den Blockchain-Server (103) zuzugreifen,
wobei das persönliche Datenmanagementverfahren umfasst:
Speichern durch die Vorrichtung für das Management persönlicher Daten (101) eines zweiten Teils persönlicher Daten über eine Person, der einen ersten Teil persönlicher Daten zum Identifizieren der Person begleitet, in Verbindung mit einer von dem Blockchain-Server (103) empfangenen ersten Transaktions-ID;
durch die Vorrichtung für das Management persönlicher Daten Senden der ersten Transaktions-ID, die dem zweiten Teil persönlicher Daten zugeordnet ist, an den Blockchain-Server (103), Löschen des zweiten Teils persönlicher Daten und der ersten Transaktions-ID und Speichern einer von dem Blockchain-Server (103) empfangenen zweiten Transaktions-ID,
Erzeugen durch den Blockchain-Server (103) der ersten Transaktions-ID, Erzeugen eines ersten Blocks (BL1), der einen Teil umgesetzter Daten enthält, die auf dem ersten Teil persönlicher Daten und der ersten Transaktions-ID beruhen, Hinzufügen des ersten Blocks (BL1) zu der Blockchain (500) und Senden der ersten Transaktions-ID an die Vorrichtung für das Management persönlicher Daten (101) und
Erzeugen durch den Blockchain-Server (103) als Reaktion auf das Empfangen der ersten Transaktions-ID von der Vorrichtung für das Management persönlicher Daten der zweiten Transaktions-ID, eines zweiten Blocks (BL2), der den ersten Teil umgesetzter Daten und die zweite Transaktions-ID enthält, Hinzufügen des zweiten Blocks (BL2) zu der Blockchain (500) und Senden der zweiten Transaktions-ID an die Vorrichtung für das Management persönlicher Daten (101).

## Revendications

1. Système de gestion d'informations personnelles, comprenant :
un serveur de chaîne de blocs (103) configuré pour stocker une chaîne de blocs (500) incluant, pour chaque bloc, une transaction et un ID de transaction destiné à identifier la transaction ; et
un appareil de gestion d'informations personnelles (101) configuré pour accéder au serveur de chaîne de blocs (103), dans lequel
l'appareil de gestion d'informations personnelles (101) est configuré pour stocker un second élément d'informations personnelles sur un individu, qui accompagnent un premier élément d'informations personnelles destinées à identifier l'individu, en association avec un premier ID de transaction reçu depuis le serveur de chaîne de blocs (103), dans lequel
l'appareil de gestion d'informations personnelles (101) est configuré pour transmettre le premier ID de transaction, associé au second élément d'informations personnelles, au serveur de chaîne de blocs (103), pour supprimer le second élément d'informations personnelles et le premier ID de transaction, et pour stocker, après avoir transmis le premier ID de transaction, un second ID de transaction reçu depuis le serveur de chaîne de blocs (103), dans lequel
le serveur de chaîne de blocs (103) est configuré pour générer le premier ID de transaction, pour générer un premier bloc (BL1) incluant un premier élément de données converties qui sont basées sur le premier élément d'informations personnelles et le premier ID de transaction, pour ajouter le premier bloc (BL1) à la chaîne de blocs (50), et pour transmettre le premier ID de transaction à l'appareil de gestion d'informations personnelles (101), et dans lequel
le serveur de chaîne de blocs (103) est configuré pour, en réponse à la réception du premier ID de transaction depuis l'appareil de gestion d'informations personnelles, générer le second ID de transaction, générer un second bloc (BL2) incluant le premier élément de données converties et le second ID de transaction, ajouter le second bloc (BL2) à la chaîne de blocs (500), et transmettre le second ID de transaction à l'appareil de gestion d'informations personnelles (101).

2. Système de gestion d'informations personnelles selon la revendication 1, dans lequel
l'appareil de gestion d'informations personnelles (101) est configuré pour transmettre, au serveur de chaîne de blocs (103), un journal relatif au traitement de gestion d'informations personnelles pour le second élément d'informations personnelles, et dans lequel
le serveur de chaîne de blocs (103) est configuré pour générer, quand le journal est reçu depuis l'appareil de gestion d'informations personnelles (101), le premier bloc (BL1) incluant le premier élément de données converties, le premier ID de transaction, et le journal, pour ajouter le premier bloc (BL1) à la chaîne de blocs (500), et pour transmettre le premier ID de transaction à l'appareil de gestion d'informations personnelles (101).

3. Système de gestion d'informations personnelles selon la revendication 1, dans lequel
l'appareil de gestion d'informations personnelles (101) est configuré pour générer le premier élément de données converties qui sont basées sur le premier élément d'informations personnelles, et pour transmettre le premier élément de données converties au serveur de chaîne de blocs (103), et dans lequel
le serveur de chaîne de blocs (103) est configuré pour générer le premier bloc (BL1) incluant le premier élément de données converties transmises depuis l'appareil de gestion d'informations personnelles (101) et le premier ID de transaction, pour ajouter le premier bloc (BL1) à la chaîne de blocs (500), et pour transmettre le premier ID de transaction à l'appareil de gestion d'informations personnelles (101).

4. Système de gestion d'informations personnelles selon la revendication 3, dans lequel
le premier élément de données converties sont une valeur de hachage (703) du premier élément d'informations personnelles.

5. Système de gestion d'informations personnelles selon la revendication 1, dans lequel
l'appareil de gestion d'informations personnelles (101) est configuré pour transmettre, au serveur de chaîne de blocs (103), un second élément de données converties qui sont basées sur un fichier exécutable de traitement de gestion d'informations personnelles relatif à des informations sur l'un au moins du premier élément d'informations personnelles ou du second élément d'informations personnelles, et dans lequel
le serveur de chaîne de blocs (103) est configuré pour :
collecter, quand le second élément de données converties reçues depuis l'appareil de gestion d'informations personnelles (101), le second élément de données converties avec un autre élément de données converties déjà incluses dans l'un quelconque des blocs de la chaîne de blocs (500) ; et
générer, quand les deux seconds éléments de données converties correspondent l'un à l'autre, le premier bloc (BL1) incluant le premier élément de données converties, le premier ID de transaction, et le second élément de données converties, ajouter le premier bloc (BL1) à la chaîne de blocs (500), et transmettre le premier ID de transaction à l'appareil de gestion d'informations personnelles (101).

6. Système de gestion d'informations personnelles selon la revendication 1, dans lequel
l'appareil de gestion d'informations personnelles (101) est configuré pour transmettre, à un terminal (104) utilisé par l'individu, des données sur au moins un élément parmi le premier ID de transaction ou le premier élément de données converties.

7. Système de gestion d'informations personnelles selon la revendication 1, dans lequel
le serveur de chaîne blocs (103) est configuré pour rechercher dans la chaîne de blocs (500) un bloc incluant le premier ID de transaction sur la base du premier ID de transaction reçu depuis un terminal (104) utilisé par l'individu, et pour transmettre un résultat de la recherche au terminal (104).

8. Système de gestion d'informations personnelles selon la revendication 1, dans lequel
le serveur de chaîne de blocs (103) est configuré pour rechercher dans la chaîne de blocs un bloc incluant le premier élément de données converties sur la base du premier élément de données converties reçu depuis un terminal (104) utilisé par l'individu, et pour transmettre un résultat de la recherche au terminal (104).

9. Système de gestion d'informations personnelles selon la revendication 1, dans lequel
l'appareil de gestion d'informations personnelles (101) est configuré pour transmettre le premier élément de données converties au serveur de chaîne de blocs (103), pour supprimer le second élément d'informations personnelles associées au premier ID de transaction, et pour stocker un second ID de transaction reçu depuis le serveur de chaîne de blocs (103), et dans lequel
le serveur de chaîne de blocs (103) est configuré pour générer le second ID de transaction, pour générer un second bloc (BL2) incluant le premier élément de données converties et le second ID de transaction, pour ajouter le second bloc (BL2) à la chaîne de blocs (500), et pour transmettre le second ID de transaction à l'appareil de gestion d'informations personnelles (101).

10. Système de gestion d'informations personnelles selon la revendication 1, dans lequel
l'appareil de gestion d'informations personnelles (101) est configuré pour identifier, sur la base d'un type du second élément d'informations personnelles, un second élément d'informations personnelles correspondant au type à partir d'un ensemble des seconds éléments d'informations personnelles, pour identifier le premier ID de transaction associé au second élément d'informations personnelles identifié, pour transmettre le premier ID d'informations (103) au serveur de chaîne de blocs (103), pour supprimer le second élément d'informations personnelles identifié de l'ensemble des seconds éléments d'informations personnelles, et pour stocker un second ID de transaction reçu depuis le serveur de chaîne de blocs (103), et dans lequel
le serveur de chaîne de blocs (103) est configuré pour générer le second ID de transaction, pour générer un second bloc (BL2) incluant le premier élément de données converties et le second ID de transaction, pour ajouter le second bloc (BL2) à la chaîne de blocs (500), et pour transmettre le second ID de transaction à l'appareil de gestion d'informations personnelles (101).

11. Système de gestion d'informations personnelles selon la revendication 1, dans lequel
l'appareil de gestion d'informations personnelles (101) est configuré pour transmettre le second ID de transaction à un terminal (104) utilisé par l'individu.

12. Système de gestion d'informations personnelles selon la revendication 11, dans lequel
le serveur de chaîne de blocs (103) est configuré pour rechercher dans la chaîne de blocs (500) un bloc incluant le second ID de transaction sur la base du second ID de transaction reçu depuis un terminal (104) utilisé par l'individu, et pour transmettre un résultat de la recherche au terminal (104).

13. Appareil de gestion d'informations personnelles (101), qui est configuré pour accéder à un serveur de chaîne de blocs (103) configuré pour stocker une chaîne de blocs (500) incluant, pour chaque bloc, une transaction et un ID de transaction destiné à identifier la transaction, l'appareil de gestion d'informations personnelles (101) comprenant :
un processeur (201) configuré pour exécuter un programme ;
un dispositif de stockage (202) configuré pour stocker le programme ; et
une interface de communication (205) configurée pour communiquer vers/depuis le serveur de chaîne de blocs (103), dans lequel
le processeur (201) est configuré pour :
générer des données converties qui sont basées sur un premier élément d'informations personnelles destinées à identifier un individu, et transmettre les données converties au serveur de chaîne de blocs (103) ;
recevoir un premier ID de transaction depuis le serveur de chaîne de blocs (103), comme résultat d'une transmission des données converties jusqu'au serveur de chaîne de blocs (103) ; et
stocker un second élément d'informations personnelles sur l'individu, qui accompagnent le premier élément d'informations personnelles, dans le dispositif de stockage (202) en association avec le premier ID de transaction reçu depuis le serveur de chaîne de blocs (103),
transmettre le premier ID de transaction associé au second élément d'informations personnelles au serveur de chaîne de blocs (103), supprimer le second élément d'informations personnelles et le premier ID de transaction, et stocker, après avoir transmis le premier ID de transaction, un second ID de transaction reçu depuis le serveur de chaîne de blocs (103).

14. Procédé de gestion d'informations personnelles, qui est exécuté par un système de gestion d'informations personnelles,
le système de gestion d'informations personnelles comprenant :
un serveur de chaîne de blocs (103) configuré pour stocker une chaîne de blocs (500) incluant, pour chaque bloc, une transaction et un ID de transaction destiné à identifier la transaction ; et
un appareil de gestion d'informations personnelles (101) configuré pour accéder au serveur de chaîne de blocs (103),
le procédé de gestion d'informations personnelles comprenant les étapes consistant à :
stocker, via l'appareil de gestion d'informations personnelles (101), un second élément d'informations personnelles sur un individu, qui accompagnent un premier élément d'informations personnelles destinées à identifier l'individu, en association avec un premier ID de transaction reçu depuis le serveur de chaîne de blocs (103) ;
transmettre, via l'appareil de gestion d'informations personnelles, le premier ID de transaction, associé au second élément d'informations personnelles, au serveur de chaîne de blocs (103), supprimer le second élément d'informations personnelles et le premier ID de transaction, et stocker un second ID de transaction reçu depuis le serveur de chaîne de blocs (103),
générer, via le serveur de chaîne de blocs (103), le premier ID de transaction, générer un premier bloc (BL1) incluant un premier élément de données converties qui sont basées sur le premier élément d'informations personnelles et le premier ID de transaction, ajouter le premier bloc (BL1) à la chaîne de blocs (500), et transmettre le premier ID de transaction à l'appareil de gestion d'informations personnelles (101), et
générer, via le serveur de chaîne de blocs (103), en réponse à la réception du premier ID de transaction depuis l'appareil de gestion d'informations personnelles, le second ID de transaction, un second bloc (BL2) incluant le premier élément de données converties et le second ID de transaction, ajouter le second bloc (BL2) à la chaîne de blocs (500), et transmettre le second ID de transaction à l'appareil de gestion d'informations personnelles (101).
